(19) Europäisches Patentamt
European Patent Office
Office européen des brevets

(11) **EP 2 580 443 B1**

(12) **EUROPEAN PATENT SPECIFICATION**

(45) Date of publication and mention
of the grant of the patent:
**17.07.2019 Bulletin 2019/29**

(51) Int Cl.:
*F02B 33/34* (2006.01)    *F01D 15/10* (2006.01)
*F02B 33/44* (2006.01)    *F02D 9/02* (2006.01)
*F02D 41/04* (2006.01)

(21) Application number: **11792829.1**

(22) Date of filing: **21.04.2011**

(86) International application number:
**PCT/US2011/033419**

(87) International publication number:
**WO 2011/156059 (15.12.2011 Gazette 2011/50)**

(54) **CONTROL METHODOLOGIES FOR THROTTLE-LOSS RECOVERING TURBINE GENERATOR SYSTEMS FOR SPARK-IGNITION ENGINES**

KONTROLLMETHODOLOGIEN FÜR DROSSELVERLUSTAUSGLEICH IN TURBINENGENERATORSYSTEMEN FÜR OTTOMOTOREN

MÉTHODOLOGIES DE COMMANDE POUR DES SYSTÈMES DE GÉNÉRATEUR DE TURBINE SERVANT À RÉCUPÉRER LES PERTES D'ÉNERGIE DUES AU PAPILLON DES GAZ ET DESTINÉS À DES MOTEURS À ÉTINCELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2010 US 353403 P**

(43) Date of publication of application:
**17.04.2013 Bulletin 2013/16**

(73) Proprietor: **Garrett Transportation I Inc.**
**Torrance, CA 90504 (US)**

(72) Inventors:
• **BERESEWICZ, Patrick, A.**
  **La Mirada, CA 90638 (US)**
• **GUIDRY, Mike**
  **Redondo Beach, CA 90277 (US)**
• **NAGARAJAN, Karthik, S.**
  **Morristown NJ 07962-2245 (US)**

(74) Representative: **LKGLOBAL**
**Lorenz & Kopf PartG mbB Patentanwälte**
**Brienner Straße 11**
**80333 München (DE)**

(56) References cited:
EP-A1- 1 462 629        EP-A1- 2 083 154
WO-A1-96/04487          CA-A1- 2 605 310
JP-A- 5 332 158         JP-A- 2005 188 348
JP-A- 2006 105 075      US-A- 5 394 848
US-A- 5 394 848         US-A1- 2004 187 852

**Description**

BACKGROUND OF THE INVENTION

This application relates generally to spark-ignition (SI) engines, and more particularly relates to systems and methods for recovering energy that would otherwise be lost in a conventional throttle in the air intake system and for converting that recovered energy to electrical power that can be usefully employed for other purposes.

On SI engines, control of engine torque output has historically been accomplished by "throttling" the intake air charge entering the engine cylinders by using a throttling valve. When set at a partially closed position to reduce engine torque to some less-than-maximum level, the throttle expands the air passing through it to reduce the intake air density entering the cylinders. To maintain the engine air/fuel ratio within the desired range, the fueling rate is reduced by the engine controller to match the reduction in air density, and engine torque output is thus reduced to the desired level.

When a throttle is nearly fully open at high loads, it poses little or no restriction to the intake air flow. However, when operating with a partially closed throttle, the SI engine suffers from a significant efficiency loss that can be directly linked to the use of a throttle to control the engine torque output. A partially closed throttle executes the desired air flow density reduction for torque control via a pressure reduction to the flow. With a partially closed throttle, the low-pressure intake air charge acts on the piston area during the intake stroke to create what is known as an intake pumping loss, which is largely responsible for the drop in the SI engine's efficiency rating at part-throttle. In simple terms, the intake pumping loss is roughly equivalent to the amount of energy the engine needs to expend to pull the intake air through the throttle. A standard throttle has no mechanism to extract the energy from the change in enthalpy of the flow passing through it, so none of this energy is recovered.

Another source of power train inefficiency is accessory drive parasitic losses. Alternators, power steering pumps, fuel pumps, oil pumps, water pumps, air conditioning compressors, and the like, have traditionally all been contributors toward parasitic losses in that they directly pulled power from the engine crankshaft via an accessory drive belt or gear train to perform their intended function (pump, pressurize, circulate, generate, etc.). In recent years, more pointed efforts have been made to improve the efficiency of these devices, and some, such as water pumps, fuel pumps, oil pumps, and power steering pumps, have also started to be converted to electric drive in an attempt to improve their under-hood packaging as well as reduce the net power they demand from the crankshaft over their operating duty cycle. The result of this trend to transition these accessory devices to electric drive is that the power demands on the vehicle electrical system and alternator, which has already been steadily increasing for safety, comfort and "infotainment" needs, is increasing even further. The alternator, which is typically responsible for maintaining an adequate state of charge on the vehicle's battery under these additional electrical loads, continues to draw its power from the engine's crankshaft. Unfortunately, the typical production alternator today still suffers from a rather low efficiency level of 50-65% even with implementation of various efficiency improvements, meaning that the crankshaft must supply the alternator's rotor mechanical power which is 1.5 to 2.0 times what the alternator needs to output electrically.

With respect to traditional SI engine design, it would be highly beneficial from the standpoint of part-throttle efficiency improvement to be able to incorporate a device or system that would be able to capture the wasted energy from the change in enthalpy of the air flow that passes through the throttle, and using that energy to perform useful work. Of added benefit would be a system that did so by electrical means, thus simultaneously helping fill the modern vehicle's ever-increasing need for electrical power.

Over the years, numerous throttle loss recovering systems of various types and executions have been proposed for SI engines. One system of particular interest is a throttle loss recovering turbine generator system. This system uses a turbine to perform the part-load intake air expansion process while simultaneously extracting energy from that same flow. The turbine is made to drive a generator, creating electrical power that is merged into the vehicle's electrical system to supplement or displace electrical power supplied by the alternator. Displacing electrical power supplied by the inherently inefficient alternator results in a multiplying effect on the power put back into the crankshaft, and thus a commensurately larger engine efficiency improvement may be obtained.

Reference is made to EP 1 462 629 A1, which discloses: in an intake passage of an internal combustion engine, a compressor combined with an electric motor/generator. A bypass valve connecting upstream and downstream portions of the intake passage to bypass the compressor is further provided. When a required intake air flow rate of the engine is smaller than a threshold value, the engine operates by natural aspiration of intake air and the electric motor/generator generate electric power by using rotational energy of the compressor which rotates due to the flow of intake air. By increasing the opening of the bypass valve as the required intake air flow rate diverges from the discharge flow rate of the compressor the intake air flow rate is accurately controlled while satisfying the power generation requirement. EP2083154A1 discloses a throttle loss recovery system using a VNT turbine coupled to a generator and a throttle valve in series with the turbine. WO96/04487A1 discloses a throttle loss recovery system using a VNT turbine coupled to a generator, a by-pass with a by-pass valve, and no throttle valve. CA 2 605 310 A1 discloses a PWM controller between a rectifier and a load, where the PWM duty cycle is dependent on generator rotational speed.

BRIEF SUMMARY OF THE DISCLOSURE

The present disclosure describes various throttle loss recovery (TLR) systems and associated control methods for controlling the generator load and the valving of the TLR system. The control methods aim to enlist the generator to serve one or more loads only when it is efficient to do so. In particular, the generator is controlled so that it supplies electrical power to the load(s) only when the generator speed is above a predetermined minimum speed threshold. The control methods also aim to prevent any overspeed excursions of the turbine/generator assembly. The present disclosure describes TLR systems employing a variable nozzle turbine (VNT) as well as systems employing a free-floating (non-variable) turbine. A bypass passage and associated bypass valve are arranged for allowing air to bypass the turbine under certain operating conditions, and the amount of air bypassed around the turbine can be varied. In some embodiments described herein, there is also a series throttle valve arranged either upstream or downstream of the turbine. The disclosed control methods include various algorithms for controlling the bypass valve, the VNT (when present), and the throttle valve (when present) under various engine operating conditions and scenarios.

In one aspect of the present disclosure, there is described a method for controlling a TLR system of the above-described type. The method comprises the steps of:

> providing a rectifier, a filter, a speed detector for detecting generator speed, and a pulse width modulation (PWM) and over-voltage controller between the generator and a load served by the generator such that AC electrical power generated by the generator is rectified and filtered into DC current, is over-voltage controlled, and is supplied to the load via the PWM controller;
>
> predefining an electrical power generation zone bounded on one side by a predefined minimum generator speed threshold $\omega_{min}$ and on an opposite side by a predefined maximum generator speed threshold $\omega_{max}$; and
>
> configuring the PWM controller such that when the TLR system is activated a duty cycle of the PWM controller is equal to zero when generator speed $\omega$ is less than $\omega_{min}$, 100% when $\omega$ is greater than $\omega_{max}$, and $F$ when $\omega$ is within the electrical power generation zone, where $F$ is a non-linear function of $\omega$, increasing with increasing $\omega$, and is greater than zero but less than 100%.

In some embodiments, the PWM controller is configured to achieve at least one predefined power generation target $T_1$ within the electrical power generation zone, wherein $T_1$ is defined by a predefined % duty cycle value $F_1$ at a predefined value of speed $\omega_1$

The PWM controller can be configured to achieve at least two predefined power generation targets $T_1$ and $T_2$ within the electrical power generation zone, wherein $T_1$ is defined by a predefined % duty cycle value $F_1$ at a predefined value of speed $\omega_1$ and $T_2$ is defined by a predefined % duty cycle value $F_2$ at a predefined value of speed $\omega_2$.

The PWM duty cycle $F$ advantageously is proportional to $\omega^n$, where $n$ is an integer or non-integer greater than 1. In one embodiment $n$ equals 2. In another embodiment $n$ equals 3.

In some embodiments the TLR system includes a bypass passage for bypassing the turbine, a bypass valve controllable to regulate flow through the bypass passage, and a throttle valve in series with the turbine for regulating flow to the engine. In such embodiments the method further comprises the step of deactivating the TLR system when electrical power generation is not required by:

> setting the PWM controller's duty cycle to 100% so as to effectively brake the generator;
> opening the bypass valve sufficiently to prevent any significant pressure drop across the bypass valve; and
> controlling engine airflow by controlling the throttle valve.

In some embodiments of the TLR system, the turbine comprises a low-leakage variable-nozzle turbine (VNT) that is controllable between fully closed and fully open positions. With such a low-leakage VNT, the flow rate through the VNT at the fully closed position is less than a required engine idle airflow rate, and therefore the series throttle is not essential and can be omitted if desired. In these embodiments, the method further comprises the step of deactivating the TLR system when electrical power generation is not required by:

> setting the PWM controller's duty cycle to 100% so as to effectively brake the generator;
> fully closing the VNT; and
> controlling engine airflow by controlling the bypass valve.

Various other control algorithms are further described herein in the detailed description with reference to the accompanying drawings.

BRIEF DESCRIPTION OF THE SEVERAL VIEWS OF THE DRAWING(S)

Having thus described the present disclosure in general terms, reference will now be made to the accompanying drawings, which are not necessarily drawn to scale, and wherein:

> FIG. 1 depicts a throttle-loss recovery system and associated SI engine to which load control methods in accordance with the invention are applicable;

FIG. 2 depicts another throttle-loss recovery system and associated SI engine to which load control methods in accordance with the invention are applicable;

FIG. 3 depicts a further throttle-loss recovery system and associated SI engine to which load control methods in accordance with the invention are applicable;

FIG. 4 depicts yet another throttle-loss recovery system and associated SI engine to which load control methods in accordance with the invention are applicable;

FIG. 5 depicts a still further throttle-loss recovery system and associated SI engine to which load control methods in accordance with the invention are applicable;

FIG. 6 depicts a load control algorithm in accordance with one embodiment of the invention, for controlling the generator load under various engine operating conditions;

FIG. 7 illustrates an exemplary load demand scenario for an engine/TLR system in accordance with the invention;

FIG. 8 illustrates the state of the TLR system having a high-leakage VNT when the TLR system is deactivated, in accordance with the invention;

FIG. 9 illustrates the state of the TLR system having a low-leakage VNT when the TLR system is deactivated, in accordance with the invention;

FIG. 10 illustrates the state of the TLR system having free-floating turbine when the TLR system is deactivated, in accordance with the invention;

FIG. 11 is similar to FIG. 7 and illustrates the state of the TLR system at various engine operating conditions corresponding to various times 1, 2, 3, 4, and 7 during the exemplary load demand scenario, for a TLR system having a high-leakage VNT in accordance with the invention;

FIG. 12 is similar to FIG. 11 but applies to a TLR system having a low-leakage VNT in accordance with the invention;

FIG. 13 is similar to FIG. 11 but applies to a TLR system having a free-floating turbine in accordance with the invention;

FIG. 14 illustrates a valve control algorithm that can be implemented specifically for positive-going (increasing load) engine airflow transitions that may provide improved throttle response in off-idle through mid-load operating modes, in accordance with the invention; and

FIG. 15 depicts an optional air valve-related generator overspeed control algorithm that may be chosen to be executed during certain high-flow rapid throttle-lift conditions in accordance with the invention.

DETAILED DESCRIPTION OF THE DRAWINGS

The present invention now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

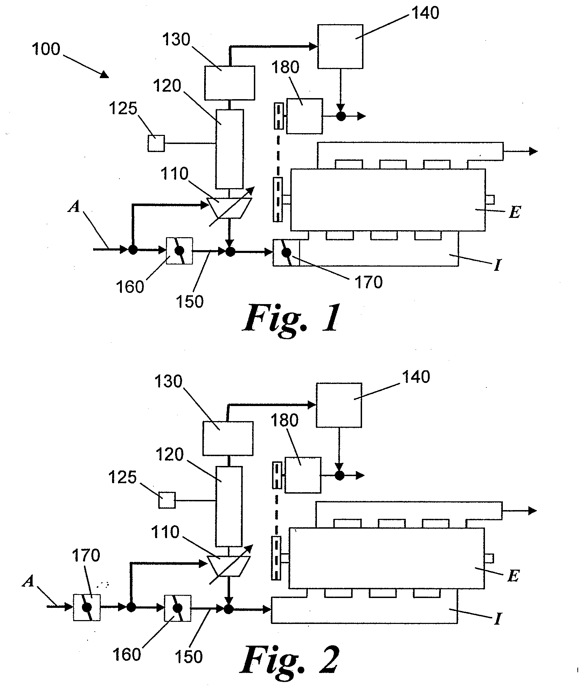

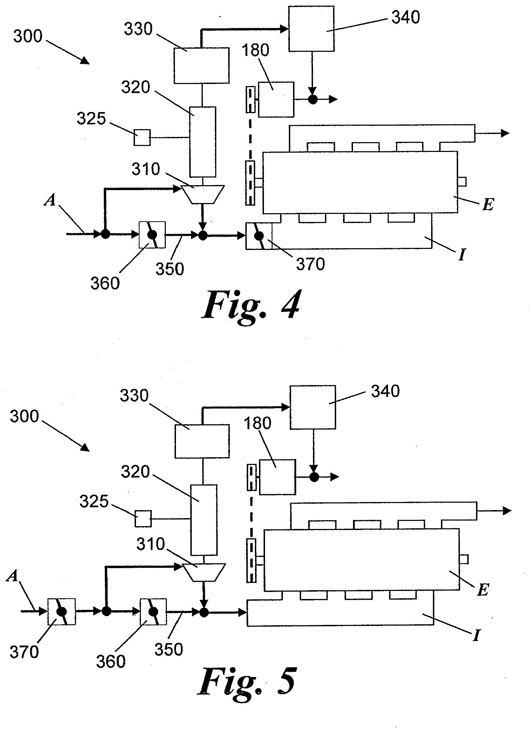

Two general configurations or classifications of turbine generator throttle loss recovery (TLR) systems are described in this disclosure. Both of these general configurations have a turbine and a bypass valve, but to drive the generator one configuration (FIGS. 1 through 3) has a variable nozzle turbine (VNT) while the other (FIGS. 4 and 5) has a free-floating (i.e., fixed-geometry) turbine. Within each of these two general configurations, those that incorporate throttle valves are furthermore classified into those that have the throttle valve located "upstream" and those that have the throttle valve located "downstream" of the turbine and bypass valve. This disclosure describes methods used to control all of these various configurations. It describes both the control methodology used to govern the air flow passing through the various valves of the system, as well as generator electrical load control methods that regulate the level of electric power production and also act as a generator overspeed control.

The embodiment shown in FIG. 1, which employs a VNT with a downstream series throttle valve, has been prototyped on a demonstrator vehicle and has been found to provide good electrical power extraction while maintaining normal vehicle driveability. Peak engine horsepower production was unaffected. Icing of the down-stream throttle has not been an issue.

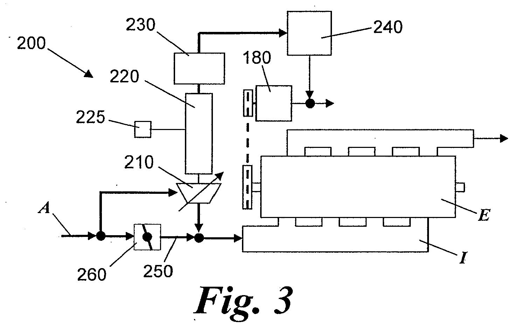

Within the general classification of TLR systems employing a VNT, the present disclosure further classifies such systems into those that have a "low-leakage VNT" and those that have a "high-leakage VNT." A "low-leakage VNT" is one that has a sufficiently low air leakage rate through the VNT mechanism when fully closed such that the VNT is able to control engine idle speed without the use of a throttle valve placed in series with the turbine, so the throttle valve may be eliminated in these system configurations (see, e.g., FIG. 3) if desired. Therefore, in the interest of simplification and brevity, the present disclosure illustrates TLR systems having low-leakage VNT turbines with no series throttle valve, but it should be understood that inclusion of a series throttle valve is an option in these systems.

A "high-leakage VNT" is one whose air leakage rate when fully closed is too great for adequate engine idle control (e.g., FIGS. 1 and 2). For systems having a high-leakage VNT, as well as configurations having a free-floating turbine (FIGS. 4 and 5) that do not control air flow rate, a throttle valve placed in series with the turbine, either upstream or downstream thereof, is necessary for idle control.

As illustrated in FIG. 1, an internal combustion engine E is shown with an associated TLR system 100. The TLR system 100 includes a high-leakage VNT turbine 110 coupled to an electrical generator 120 such that the turbine drives the generator to rotate to produce electrical power under certain engine operating conditions as further described below. AC electrical power generated by the generator 120 is fed to a rectifier/filter 130 that rectifies the AC current to produce DC current and filters the current and supplies it to a pulse width modulated (PWM) controller 140. The operation of the PWM controller is further described below. A speed detector 125 associated with the rectifier/filter and PWM controller senses the rotational speed $\omega$ of the generator 120. The PWM controller 140 includes an associated over-voltage controller for preventing excessive voltage from being supplied to the load(s) served by the generator 120. Although FIG. 1 illustrates the speed detector 125, the rectifier/filter 130, and the PWM and over-voltage controller 140 as separate items, some or all of these components can be housed in a common housing or box if desired.

The TLR system 100 further includes a bypass passage 150 arranged for bypassing the VNT 110. A bypass valve 160 is disposed in or associated with the bypass passage 150 and is controllable between closed, open, and partially open positions so as to regulate flow through the bypass passage 150. When the bypass valve 160 is closed, all incoming air (represented by arrow A) must pass through the VNT 110. When the bypass valve 160 is partially open or fully open, some of the incoming air bypasses the VNT via the bypass passage 150 and bypass valve 160. The system also includes a throttle valve 170 placed downstream of and in series with the VNT 110 for regulating air flow into the intake I of the engine E.

The system 100 illustrated in FIG. 2 is generally similar to that of FIG. 1, except that the throttle valve 170 is placed upstream of the VNT.

FIG. 3 depicts a TLR system 200 that is generally similar to that of FIGS. 1 and 2, except that instead of employing a high-leakage VNT, the system 200 employs a low-leakage VNT 210. As a consequence, a series throttle valve is not essential and thus has been omitted. In other respects, the system 200 is substantially like the previously described systems 100. Thus, the system includes a generator 220, a speed detector 225, a rectifier/filter 230, a PWM and over-voltage controller 240, and a bypass passage 250 and associated bypass valve 260. Operation of these components is similar to that of their counterparts in the previously described systems.

FIGS. 4 and 5 depict a TLR system 300 that employs a free-floating turbine (FFT) 310 instead of a VNT. In other respects, the system configuration in FIG. 4 is the same as that in FIG. 1, and the configuration in FIG. 5 is the same as that in FIG. 2. Thus, the system 300 includes generator 320, a speed detector 325, a rectifier/filter 330, a PWM and over-voltage controller 340, a bypass passage 350 and associated bypass valve 360, and a series throttle valve 370. Operation of these components is similar to that of their counterparts in the previously described systems of FIGS. 1 and 2. As noted, the throttle valve 370 is essential in the system 300 because the free-floating turbine has a fixed geometry and thus cannot regulate air flow.

In the systems of FIGS 1 through 5, the generator 120, 220, 320 (and associated rectifier/filter and PWM controller) serves to supplement or displace electrical power provided by the alternator 180 to electrical loads such as a battery (not shown in the figures) and various other electrical loads (also not shown in the figures). However, as noted further herein, in other embodiments the generator can serve additional and/or different loads than the alternator, and in some applications the alternator can be omitted altogether.

Load Control Algorithm

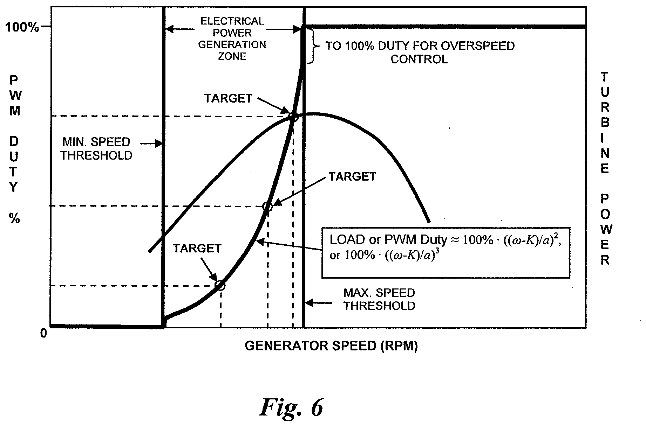

With reference to FIG. 6, a load control algorithm for electrical power production by the generator is illustrated, in accordance with one embodiment of the invention. The algorithm is implemented in the PWM controller 140 and is based on applying a non-linear (e.g., a second- or third-order exponential) electrical load (PWM duty cycle) with respect to generator speed, tailored for the engine-TLR system characteristics such that one or more selected power generation targets are achieved within the electrical power generation zone. The electrical power generation zone is bounded on the low side by a minimum generator speed threshold $\omega_{min}$ below which the PWM duty cycle is zero. Zero PWM duty cycle at low speeds helps the turbine-driven generator quickly speed up on off-idle engine accelerations so that the turbine can be more efficient at extracting power from the airflow before applying any generator loading that would tend to slow it down. On the high side, the electrical power generation zone is bounded by a maximum generator speed threshold $\omega_{max}$ above which the PWM duty cycle is set to 100% to control generator overspeed excursions. Most generator speed control is achieved simply by the inherent steepness of the second- or third-order exponential electrical load applied by the load control algorithm within the electrical power generation zone, as compared to the available turbine shaft power.

Within the electrical power generation zone, the PWM % duty cycle, *F,* can be governed by an equation of the general form:

$$F \approx 100\% \cdot ((\omega - K)/a)^2,$$

or

$$F \approx 100\% \cdot ((\omega - K)/a)^3,$$

where *K* and *a* are non-zero constants that are selected based on the needs of a particular application. More generally, *F* can be proportional to $((\omega - K)/a)^n$ where *n* is an integer or non-integer number greater than 1. Thus, for example, *n* can equal 1.8, or 2, or 2.33, or 3, etc.

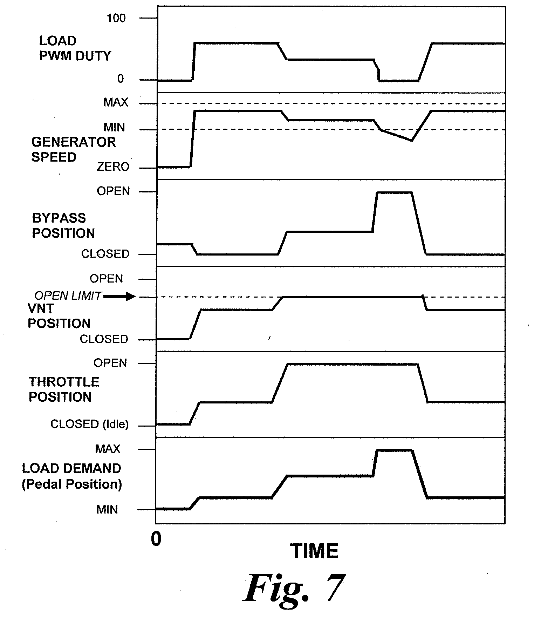

FIG. 7 illustrates an exemplary load demand scenario that will be used to aid the explanation of many of the TLR system valve and load control algorithms to be discussed below. As indicated by the Load Demand at the bottom of the diagram, beginning at Time = 0, the engine is shown idling, followed by an off-idle transition to a low-load pedal position typical of highway cruise, followed by another transition to a mid-load setting, followed by another transition to the full-load setting (known as Wide Open Throttle, or WOT), followed by a deceleration transition back to the low-load pedal position typical for highway cruise. The corresponding positions for the throttle, VNT, and bypass valves, as well as generator speed and the PWM duty, are shown in solid lines.

## VNT Open Vane Angle Limit

As indicated in FIG. 7, the TLR systems using a VNT turbine that execute airflow control through regulation of the vane angles of the VNT nozzle mechanism may have the maximum flow vane angle limited to a less-than-fully-open value in order to prevent a turbine efficiency drop-off related to vane angularity.

## TLR System Deactivated

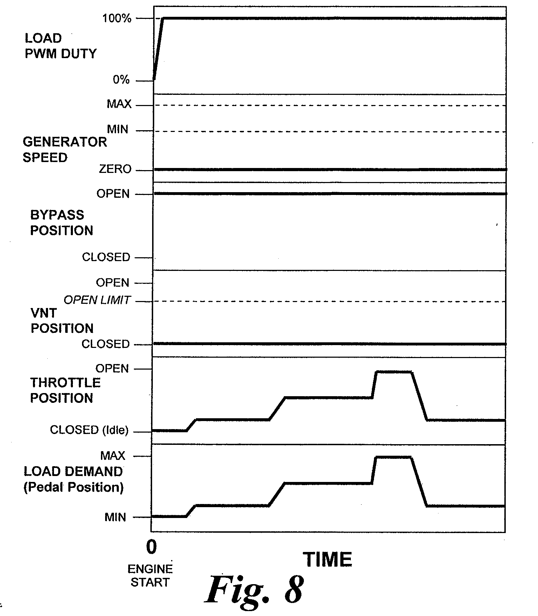

There are times when it is desired to deactivate the TLR system. With reference to FIGS. 1, 2, and 8, when the system includes a high-leakage VNT (such as in FIGS. 1 and 2), the VNT **110** is fully closed when the TLR system **100** is deactivated. It is advantageous to set the PWM duty to maximum (100%) to act as a brake on the generator **120**. The bypass valve **160** is opened sufficiently so as not to have a significant pressure drop across it. Engine airflow control for all operating conditions is handled by the series throttle valve **170**. The bottom Load Demand line in FIG. 8 shows the pedal position and the other lines show the corresponding positions of the throttle valve, VNT, and bypass valve, as well as the generator speed and PWM duty.

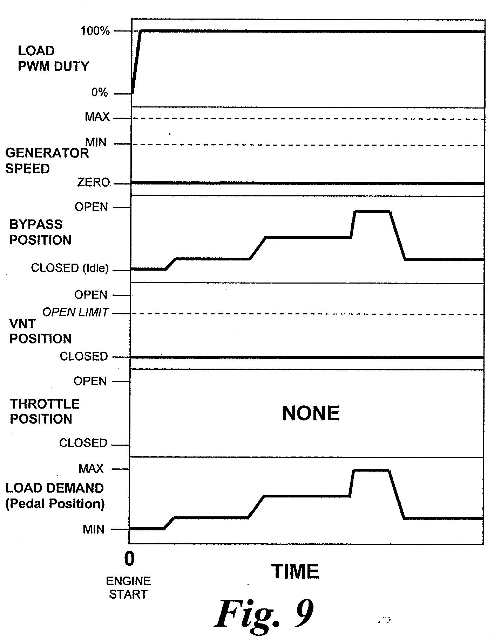

With reference to FIGS. 3 and 9, when the TLR system employs a low-leakage VNT (such as in FIG. 3), when the TLR system is deactivated the VNT **210** is fully closed. Load control PWM duty is set to maximum (100%) to act as a brake on the generator **220.** Engine air flow control for all operating conditions is handled by the by-pass valve **260.** The bottom Load Demand line in FIG. 9 shows the pedal position and the others lines show the corresponding positions of the throttle valve, VNT, and bypass valve, as well as the generator speed and PWM duty.

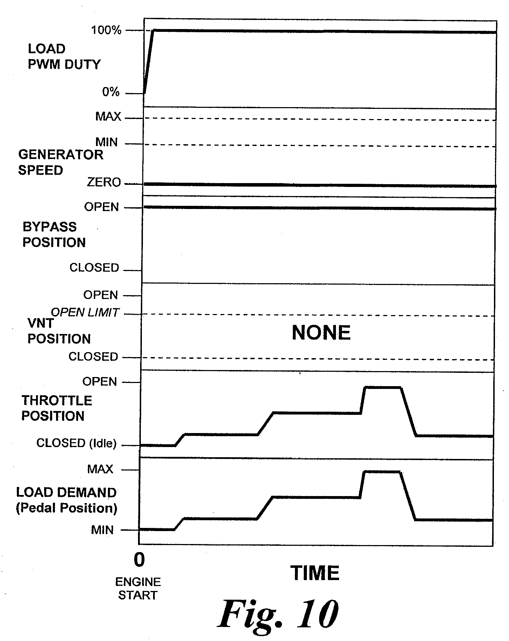

With reference to FIGS. 4, 5, and 10, when the TLR system employs a free-floating turbine (such as in FIGS. 4 and 5) and the TLR system is deactivated, the load control PWM duty is set to maximum (100%) to act as a brake on the generator **320,** and the bypass valve **360** is opened sufficiently so as not to have a significant pressure drop across it. Engine air flow control for all operating conditions is handled by the series throttle valve **370.** The bottom Load Demand line in FIG. 10 shows the pedal position and the other lines show the corresponding positions of the throttle valve and bypass valve, as well as the generator speed and PWM duty.

## TLR System Activated: High-Leakage VNT

The following is a summary of the valve and load control methodology used when the TLR system is active and uses a VNT mechanism with a closed air leakage rate that exceeds what is necessary to adequately control engine idle speed.

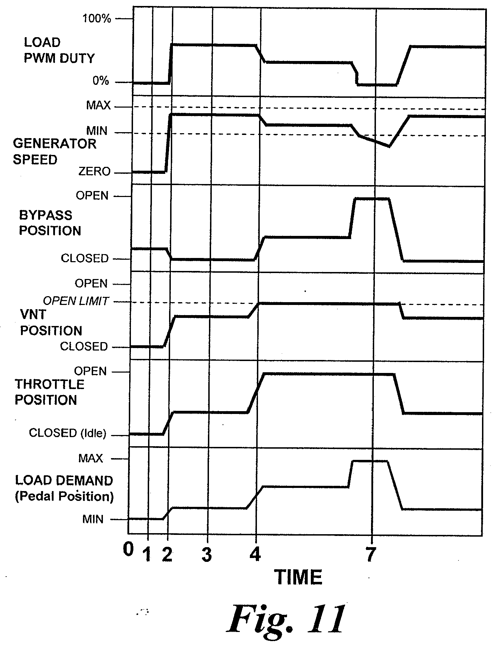

With reference to FIG. 11, the state of the TLR system at an engine idle condition (TIME = 1) is shown for a system such as shown in FIGS. 1 and 2. The VNT **110** is fully closed. Idle speed control is accomplished by closing the series throttle valve **170** to achieve the required idle airflow setting. To achieve a good idle characteristic, the bypass valve **160** is partially opened to apply either near atmospheric pressure in front of the throttle on systems with a downstream series throttle (FIG. 1), or close to the intake manifold vacuum behind the throttle on systems with an upstream series throttle (FIG. 2). The load control PWM duty is zero if generator speed is below the minimum speed threshold $\omega_{min}$ for electrical power production.

With further reference to FIG. 11, the state of the TLR system at an off-idle transition (TIME = 2) is shown for the high-leakage VNT system. Starting from the fully closed position, the VNT is moved partway toward the fully open position and simultaneously the by-pass valve is moved from an initial partially open position toward the closed position. The VNT and bypass valve are moved at rates such that net air flow through both increases to meet the engine air flow demand. The series throttle valve is simultaneously opened at a higher rate than net airflow so as not to create a significant pressure drop across it. The load control PWM duty is zero until the minimum generator speed threshold $\omega_{min}$ for electrical power production is exceeded, then the PWM duty is increased exponentially with respect to increasing generator speed in such a manner that one or more power generation targets within the electrical power generation zone are achieved. The steepness of the exponential PWM duty curve acts as the primary generator overspeed control. When the generator speed exceeds the maximum generator speed threshold $\omega_{max}$ the PWM duty is set to 100% as a secondary overspeed control.

At TIME = 3 in FIG. 11, a low load cruise with a high-leakage VNT system is shown. The VNT position is adjusted so air flow through it meets engine air flow demand. The bypass valve is closed. The series throttle valve is opened sufficiently so as not to create a significant pressure drop across it. The load control PWM duty is adjusted exponentially to achieve tailored power generation targets with respect to generator speed. The steepness of the exponential PWM duty curve acts as the primary generator overspeed control. When the generator speed exceeds the maximum generator speed threshold $\omega_{max}$ the PWM duty is set to 100% as a secondary overspeed control.

At TIME = 4 in FIG. 11, a transition to medium or high load with a high-leakage VNT system is shown. The VNT and bypass valve are opened at rates such that net air flow through both increases to meet engine airflow demand. The maximum opening limit of the VNT's nozzle mechanism is defined in accordance with turbine efficiency drop-off considerations. The bypass valve starts to open prior to the VNT reaching its maximum open limit, so as to create a smooth transition in air flow. The series throttle valve is simultaneously opened at a higher rate than net airflow so as not to create a significant pressure drop across it. The load control PWM duty is adjusted exponentially to achieve tailored power generation targets with respect to generator speed. The steepness of the exponential PWM duty curve acts as the primary generator overspeed control. When the generator speed exceeds the maximum generator speed threshold $\omega_{max}$ the PWM duty is set to 100% as a secondary overspeed control.

At TIME = 7 in FIG. 11, a wide-open-throttle (WOT) condition with a high-leakage VNT system is shown. The VNT is opened to its maximum open limit defined by turbine efficiency drop-off considerations. The bypass valve is opened sufficiently to meet WOT engine air flow demand. The series throttle valve is opened sufficiently so as not to create a significant pressure drop across it. Though little electrical power is expected, the load control PWM duty is still adjusted exponentially to achieve tailored power generation targets with respect to generator speed. The steepness of the exponential PWM duty curve acts as the primary generator overspeed control. Generator speed exceeding the maximum generator speed threshold causes the PWM duty to go to 100% as a secondary overspeed control. The PWM duty is set to zero if generator speed drops below the minimum speed threshold for electrical power production.

## TLR System Activated: Low-Leakage VNT

The following is a summary of the valve and load control methodology used when the TLR system is active and uses a VNT mechanism with a closed air leakage rate low enough to adequately control engine idle speed.

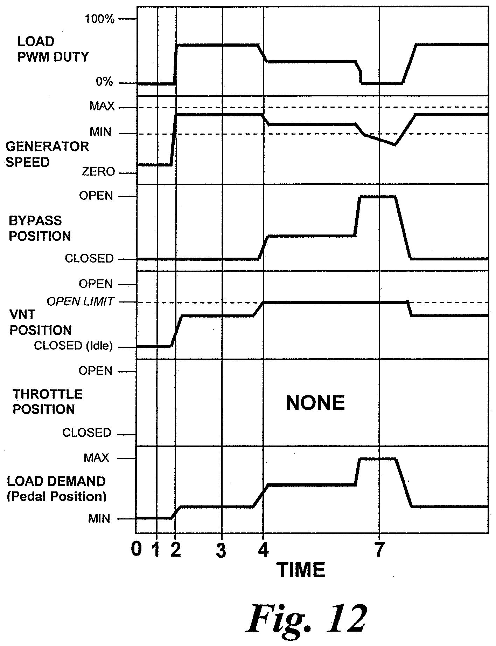

With reference to FIG. 12, the state of the TLR system at an engine idle condition (TIME = 1) is shown for a system with a low-leakage VNT such as shown in FIG. 3. Idle speed control is obtained by closing the VNT **210** to achieve the idle air flow setting. The bypass valve **260** is fully closed. The load control PWM duty is zero if generator speed is below the minimum speed threshold for electrical power production.

At TIME = 2 in FIG. 12, an off-idle transition with the low-leakage VNT system is shown. The VNT is opened at a rate such that air flow through it increases to meet engine air flow demand. The bypass valve remains fully closed. The load control PWM duty is zero until the minimum generator speed threshold for electrical power production is exceeded, then the PWM duty is increased exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 3 in FIG. 12, a low load cruise with a low-leakage VNT system is shown. The VNT position is adjusted so air flow through it meets engine air flow demand. The bypass valve remains fully closed. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 4 in FIG. 12, a transition to medium or high load with a low-leakage VNT system is shown. The VNT and bypass valve are opened at rates such that net air flow through both increases to meet engine air flow demand. The maximum opening limit of a swing-vane type VNT is defined by turbine efficiency drop-off considerations. The bypass valve starts to open prior to the VNT reaching maximum open limit so as to create a smooth transition in air flow. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 7 in FIG. 12, a wide-open-throttle (WOT) condition with a low-leakage VNT system is shown. The swing-vane VNT is opened to its maximum open limit defined by turbine efficiency drop-off considerations. The bypass valve is opened sufficiently to meet WOT engine air flow demand. Though little electrical power is expected, the load control PWM duty is still adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as secondary overspeed control.

TLR System Activated: Free-Floating Turbine

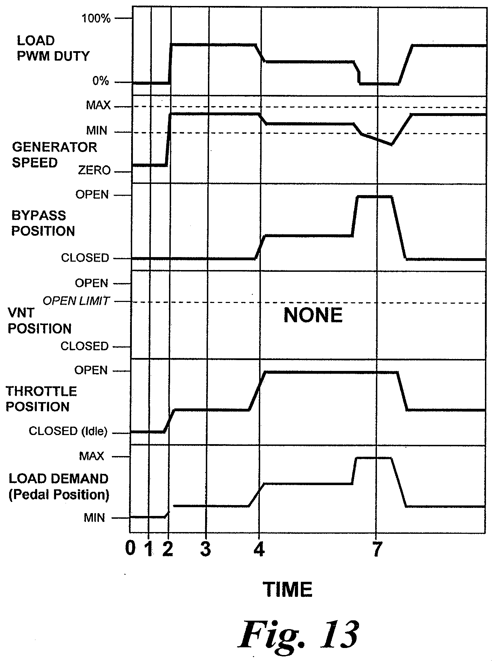

With reference to FIG. 13, the state of the TLR system at an engine idle condition (TIME = 1) is shown for a system with a free-floating turbine such as shown in FIGS. 4 and 5. Idle speed control is obtained by closing the series throttle valve **370** to achieve the required idle air flow setting. Typically there is sufficient air flow through the free-floating turbine to achieve a good idle characteristic without partially opening the bypass valve **360** to apply near atmospheric pressure in front of the throttle valve (on systems with a downstream series throttle), or near intake manifold vacuum behind the throttle valve (on systems with an upstream series throttle). The load control PWM duty is zero if generator speed is below the minimum speed threshold for electrical power production.

At TIME = 2 in FIG. 13, an off-idle transition with the free-floating turbine system is shown. The series throttle valve is opened at a rate such that air flow through it increases to meet engine airflow demand. The bypass valve is closed. The load control PWM duty is zero until the minimum generator speed threshold for electrical power production is exceeded, then PWM duty is increased exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 3 in FIG. 13, a low load cruise condition with the free-floating turbine system is shown. The series throttle valve position is adjusted so air flow through it meets engine airflow demand. The bypass valve remains closed. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control. While maintaining a desired engine air flow rate, the amount of electrical power generation can also be tailored by adjusting the relative opening of the series throttle valve and the bypass valve, which regulate turbine power. To increase turbine power, the series throttle valve opening is increased and the bypass valve opening is decreased to shift the expansion ratio to be across the bypass valve and turbine. To reduce turbine power, the series throttle valve opening is decreased and the bypass valve opening is increased to shift the expansion ratio to be across the throttle valve, instead of the turbine.

At TIME = 4 in FIG. 13, a transition to a medium or high load condition with a free-floating turbine system is shown. The series throttle valve and bypass valve are opened at rates such that net air flow through both increases to meet engine air flow demand. The bypass valve starts to open prior to the free-floating turbine reaching its choked flow limit so as to create a smooth transition in air flow. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control. While maintaining a desired engine air flow rate, the amount of electrical power generation can also be tailored by adjusting the relative opening of the series throttle valve and the bypass valve, which regulate turbine power. To increase turbine power, the series throttle valve opening is increased and the bypass valve opening is decreased to shift the expansion ratio to be across the bypass valve and turbine. To reduce turbine power, the series throttle valve opening is decreased and the bypass valve opening is increased to shift the expansion ratio to be across the throttle valve, instead of the turbine.

At TIME = 7 in FIG. 13, a wide-open-throttle (WOT) condition with a free-floating turbine system is shown. The bypass valve is opened sufficiently to meet WOT engine air flow demand. The series throttle valve is opened sufficiently so as not to create a significant pressure drop across it. Though little electrical power is expected, load control PWM duty is still adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

Bypass Valve Control Algorithm for Improved Throttle Response

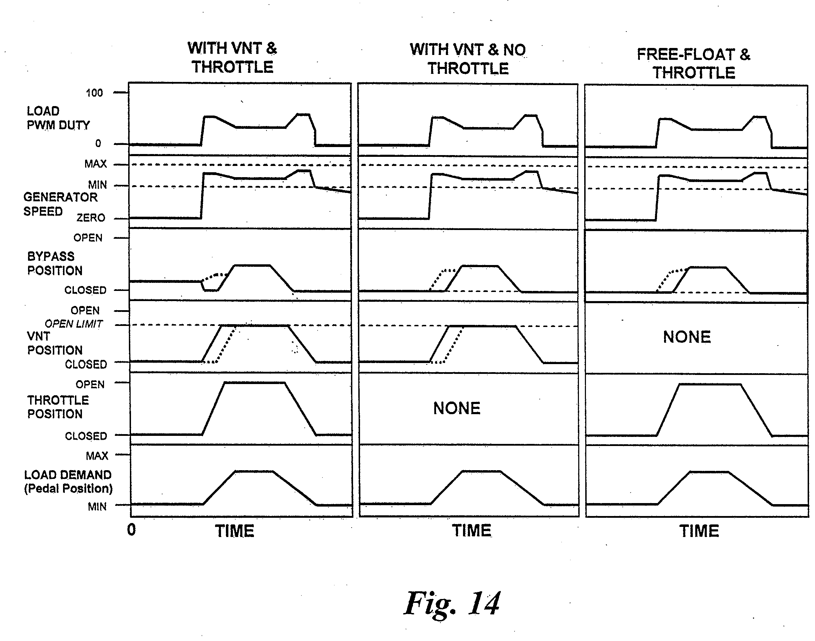

FIG. 14 illustrates a valve control algorithm that can be implemented specifically for positive-going (increasing load) engine air flow transitions (i.e., engine accelerations) that may provide improved throttle response for idle through mid-load operating modes, suitable for certain applications. This alternative algorithm consists first of rapidly opening the bypass valve and the throttle valve, if one is present, from their initial positions to more-open positions, at a rate in proportion to the commanded acceleration rate (pedal position). Next, as the rate of positive-going load demand slows, a transition is executed whereby the bypass valve closes to its normal position as the VNT opens or air flow through the free-floating turbine reaches steady-state. This algorithm can be applied to all TLR System configurations described within this disclosure.

Algorithm for Improved Electrical Power Generation During "Fuel-Cut" Decelerations

An alternate valve control algorithm for improved electrical power generation can be implemented during decreasing air flow transitions where "fuel-cut" to the cylinders has been executed. This alternative algorithm, when triggered by the "fuel-cut" signal, consists of positioning the series throttle valve, VNT (if applicable), and bypass valve to certain optimized positions based on system characteristics for improved electrical power generation at the engine RPM condition present. Automatic transmissions, continuously variable transmissions (CVTs), and other advanced transmissions whose gear selection is electronically controlled may also be triggered to down-shift to a lower gear by this algorithm under certain conditions to increase engine RPM for improved electrical power production. The trade-off between the desired level of engine braking and electrical power production may be tailored within the algorithm by adjustment of the valve position-to-RPM and/or vehicle speed relationship. When the "fuel-cut" signal ceases, the valves first return to their normal positions based on Load Demand (pedal position) and then a signal is sent to the engine controller that it is safe to re-enable fueling. This algorithm can be applied to all TLR system configurations described within this disclosure.

Overspeed Control Algorithm for Rapid Throttle-Lift

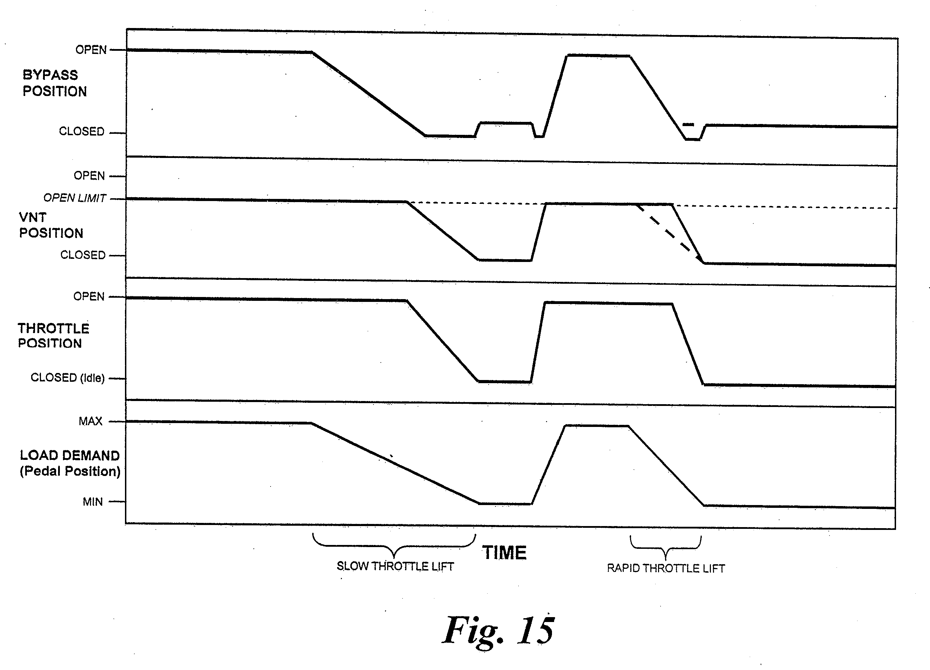

On TLR system configurations having a VNT turbine, an optional air valve-related generator overspeed control algorithm may be chosen to be executed during certain high-flow rapid throttle-lift conditions. This is illustrated in FIG. 15. To illustrate the technique, starting with the system operating at high flow near WOT, when a *slow* (i.e., at a rate lower than a predetermined rate) throttle-lift event occurs, the bypass valve begins closing first as it follows the decreasing load demand signal, followed next by closure of the VNT. However, when a high-flow *rapid* (i.e., at a rate higher than the predetermined rate) throttle-lift event occurs, the rapidly decreasing load demand signal triggers execution of the algorithm, forcing the VNT to begin closing much sooner (dashed lines) to prevent the bypass valve's air flow momentum from being forced through the VNT, possibly causing a turbine overspeed condition. Also, the bypass valve position near the idle flow setting is adjusted by the algorithm to ensure a smooth transition to idle.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A method for controlling a throttle loss recovery (TLR) system for a spark-ignition internal combustion engine wherein the TLR system includes a turbine through which intake air passes before being delivered to the engine and an electrical generator coupled to the turbine and driven to rotate by the turbine, the TLR system further including a bypass passage for bypassing the turbine and a bypass valve controllable to regulate flow through the bypass passage, and wherein the turbine comprises a high-leakage variable-nozzle turbine (VNT) that is controllable between fully closed and fully open positions, flow rate through the VNT at the fully closed position being greater than a required engine idle air flow rate, the TLR system further including a throttle valve in series with the VNT for regulating flow to the engine, the method comprising the steps of:

detecting a rotational speed $\omega$ of the generator;
providing a rectifier, a filter, an over-voltage controller, and a pulse width modulation (PWM) controller between the generator and a load served by the generator such that AC electrical power generated by the generator is rectified and filtered into DC current, over-voltage controlled, and is supplied to the load via the PWM controller;
predefining an electrical power generation zone bounded on one side by a predefined minimum generator speed threshold $\omega_{min}$ and on an opposite side by a predefined maximum generator speed threshold $\omega_{max}$;
configuring the PWM controller such that when the TLR system is activated a duty cycle of the PWM controller is equal to:

zero when generator speed $\omega$ is less than $\omega_{min}$;
100% when $\omega$ is greater than $\omega_{max}$; and
$F$ when $\omega$ is within the electrical power generation zone, where $F$ is greater than zero but less than 100%;

at engine idle, controlling engine air flow rate by setting the VNT at the fully closed position, setting the bypass valve at a partially open position, and controlling the throttle valve to achieve the required idle air flow rate.

2. The method of claim 1, wherein during a transition from idle to a higher engine load condition, the method further comprises the steps of:
moving the VNT from the fully closed position toward a partially open position and simultaneously moving the bypass valve from the partially open position toward a closed position, the VNT and bypass valve being moved at respective rates such that air flow rates through the VNT and the bypass valve collectively meet engine air flow demand.

3. The method of claim 2, further comprising the step of opening the throttle valve simultaneously with the movements of the VNT and the bypass valve, the throttle valve being moved at a rate sufficiently high, and to a position sufficiently open, to substantially prevent any significant pressure drop across the throttle valve.

4. The method of claim 1, wherein during a low-load cruise condition, where $\omega$ is within the electrical power generation zone, the method further comprises the steps of:
setting the bypass valve in the closed position, opening the throttle valve sufficiently to substantially prevent any significant pressure drop across the throttle valve, and controlling engine air flow by controlling the position of the VNT.

5. The method of claim 1, wherein during a transition from a medium engine load to a high engine load the method further comprises the steps of:
moving the VNT from a partially open position toward the fully open position and simultaneously moving the bypass valve from the closed position toward a partially open position, the VNT and bypass valve being moved at respective rates such that air flow rates through the VNT and the bypass valve increase to collectively meet engine air flow demand.

6. The method of claim 5, further comprising the step of opening the throttle valve simultaneously with the movements of the VNT and the bypass valve, the throttle valve being moved at a rate sufficiently high, and to a position sufficiently open, to substantially prevent any significant pressure drop across the throttle valve.

7. The method of claim 1, wherein during a transition to a wide-open-throttle engine condition the method further comprises the steps of:
setting the VNT in the fully open position, opening the throttle valve sufficiently to substantially prevent any significant pressure drop across the throttle valve, and meeting engine air flow demand by controlling the bypass valve.

8. The method of claim 1, further comprising a technique for improving engine acceleration response for rapidly commanded idle through mid-load engine accelerations by executing the steps of:
first rapidly opening the bypass valve and throttle valve from initial positions to more open positions thereof at a rate in proportion to the commanded acceleration rate, to provide air flow that meets the rapid engine transient air flow demand while maintaining the VNT in an initial idle position, and then beginning to open the VNT to generate electrical power while moving the bypass valve back toward the closed position an appropriate amount at an appropriate rate such that the combined air flow through the VNT and bypass valve, as regulated by the throttle valve, collectively still meet the engine air flow demand.

9. The method of claim 1, wherein during a high engine air flow condition where the bypass valve is at least partially open, when a rapid decrease in engine load demand occurs for quickly decelerating the engine, the method is effective for rapidly decreasing engine load without causing an over-speed of the VNT and generator, the method further comprising the steps of:
moving the bypass valve toward the closed position in accordance with the decreasing engine load demand, and nearly simultaneously moving the VNT toward the fully closed position a substantial amount at a rapid rate, thereby preventing air flow momentum from being forced through the VNT in excessive amounts.

10. A method for controlling a throttle loss recovery (TLR) system for a spark-ignition internal combustion engine wherein the TLR system includes a turbine through which intake air passes before being delivered to the engine and an electrical generator coupled to the turbine and driven to rotate by the turbine, the TLR system further including a bypass passage for bypassing the turbine and a bypass valve controllable to regulate flow through the bypass passage, and wherein the turbine comprises a low-leakage variable-nozzle turbine (VNT) that is controllable between fully closed and fully open positions, flow rate through the VNT at the fully closed position being less than a required engine idle air flow rate such that engine idle speed is achieved without requiring a series throttle valve, the method comprising the steps of:

detecting a rotational speed $\omega$ of the generator;

providing a rectifier, a filter, an over-voltage controller, and a pulse width modulation (PWM) controller between the generator and a load served by the generator such that AC electrical power generated by the generator is rectified and filtered into DC current, over-voltage controlled, and is supplied to the load via the PWM controller;

predefining an electrical power generation zone bounded on one side by a predefined minimum generator speed threshold $\omega_{min}$ and on an opposite side by a predefined maximum generator speed threshold $\omega_{max}$;

configuring the PWM controller such that when the TLR system is activated a duty cycle of the PWM controller is equal to:

zero when $\omega$ is less than $\omega_{min}$;
100% when $\omega$ is greater than $\omega_{max}$; and
$F$ when $\omega$ is within the electrical power generation zone, where $F$ is greater than zero but less than 100%; and

at engine idle, controlling engine air flow rate by setting the bypass valve at a fully closed position and controlling the position of the VNT to achieve the required idle air flow rate.

11. The method of claim 10, further comprising, during engine idle, controlling engine air flow rate by an alternate method by setting the VNT at the fully closed position and controlling the position of the bypass valve to achieve the required idle air flow rate.

12. The method of claim 10, wherein during a transition from idle to a higher engine load condition, the method further comprises the steps of:
maintaining the bypass valve in the closed position while opening the VNT to a partially open position such that air flow rate through the VNT increases to meet engine air flow demand.

13. The method of claim 10, wherein during a low-load cruise condition, where $\omega$ is within the electrical power generation zone, the method further comprises the steps of:
maintaining the bypass valve in the closed position and setting the VNT to meet engine air flow demand.

14. The method of claim 10, wherein during a transition from a medium engine load to a high engine load the method further comprises the steps of:
moving the VNT from a partially open position toward the fully open position and simultaneously moving the bypass valve from the closed position toward a partially open position, the VNT and bypass valve being moved at respective rates such that air flow rates through the VNT and the bypass valve increase to collectively meet engine air flow demand.

15. The method of claim 14, wherein the VNT begins to move toward the fully open position before the bypass valve begins to move from the closed position toward the partially open position, and the bypass valve begins to move before the VNT reaches the fully open position.

16. The method of claim 10, wherein during a transition to a wide-open-throttle engine condition the method further comprises the steps of:
setting the VNT in the fully open position, and opening the bypass valve sufficiently to meet engine air flow demand.

17. The method of claim 10, further comprising a technique for improving engine acceleration response for rapidly commanded idle through mid-load engine accelerations by executing the steps of:
first rapidly opening the bypass valve from the closed position to a more open position thereof at a rate in proportion to the commanded acceleration rate, to provide air flow that meets the rapid engine transient air flow demand while maintaining the VNT in an initial idle position, and then beginning to open the VNT to generate electrical power while moving the bypass valve back toward the closed position an appropriate amount at an appropriate rate such that the combined air flow through the VNT and bypass valve collectively still meet the engine air flow demand.

18. The method of claim 10, wherein during a high engine air flow condition where the bypass valve is at least partially open, when a rapid decrease in engine load demand occurs for quickly decelerating the engine, the method is effective for rapidly decreasing engine load without causing an over-speed of the VNT turbine and generator, the method further comprising the steps of:
moving the bypass valve toward the closed position in accordance with the decreasing engine load demand, and nearly simultaneously moving the VNT toward the fully closed position a substantial amount at a rapid rate, thereby preventing air flow momentum from being forced through the VNT in excessive amounts.

19. A method for controlling a throttle loss recovery (TLR) system for a spark-ignition internal combustion engine wherein the TLR system includes a turbine through which intake air passes before being delivered to the engine and an electrical generator coupled to the turbine and driven to rotate by the turbine, the TLR system further including a bypass passage for bypassing the turbine and a bypass valve controllable to regulate flow through the bypass passage, and wherein the turbine comprises a free-float turbine (FFT), the TLR system further including a throttle valve in series with the FFT for regulating air flow to the engine,
the method comprising the steps of:

detecting a rotational speed $\omega$ of the generator;
providing a rectifier, a filter, an over-voltage controller, and a pulse width modulation (PWM) controller between the generator and a load served by the generator such that AC electrical power generated by the generator is rectified and filtered into DC current, over-voltage controlled, and is supplied to the load via the PWM controller;
predefining an electrical power generation zone bounded on one side by a predefined minimum generator speed threshold $\omega_{min}$ and on an opposite side by a predefined maximum generator speed threshold $\omega_{max}$;
configuring the PWM controller such that when the TLR system is activated a duty cycle of the PWM controller is equal to:

zero when generator speed $\omega$ is less than $\omega_{max}$;
100% when $\omega$ is greater than $\omega_{max}$; and
$F$ when $\omega$ is within the electrical power generation zone, where $F$ is greater than zero but less than 100%;

at engine idle, controlling engine air flow rate by setting the bypass valve at a fully closed position and controlling the throttle valve to achieve the required idle air flow rate.

20. The method of claim 19, wherein during a transition from idle to a higher engine load condition, the method further comprises the steps of:
maintaining the bypass valve in the closed position and opening the throttle valve at a rate, and to a position, sufficient to meet engine air flow demand.

21. The method of claim 19, wherein during a low-load cruise condition, where $\omega$ is within the electrical power generation zone, the method further comprises the steps of:
maintaining the bypass valve in the closed position and controlling engine air flow by controlling the position of the throttle valve.

22. The method of claim 19, wherein during a low-load cruise condition, where $\omega$ is within the electrical power generation zone, the method further comprises the steps of:
increasing turbine power by moving the bypass valve at an appropriate rate closer to the closed position thereof and simultaneously moving the throttle valve at an appropriate rate closer to an open position thereof so as to shift the air flow expansion away from the throttle valve and toward the bypass valve and the FFT, while maintaining the desired engine air flow rate.

23. The method of claim 19, wherein during a low-load cruise condition, where $\omega$ is within the electrical power generation zone, the method further comprises the steps of:
decreasing turbine power by moving the bypass valve at an appropriate rate closer to an open position thereof and simultaneously moving the throttle valve at an appropriate rate closer to a closed position thereof so as to shift the air flow expansion away from the bypass valve and the FFT and toward the throttle valve, while maintaining the desired engine airflow rate.

24. The method of claim 19, wherein during a transition from a medium engine load to a high engine load the method further comprises the steps of:
moving the throttle valve from a partially open position toward the fully open position and simultaneously moving the bypass valve from the closed position toward a partially open position, the throttle valve and bypass valve being moved at respective rates such that air flow rates through the throttle valve and the bypass valve increase to meet engine air flow demand.

25. The method of claim 24, wherein the throttle valve begins to move from the partially open position toward the fully open position before the bypass valve begins to move from the closed position toward the partially open position, and the bypass valve begins to move toward the partially open position before the throttle valve reaches the fully open position.

26. The method of claim 25, further comprising the steps of:
increasing turbine power by moving the bypass valve at an appropriate rate closer to the closed position thereof and simultaneously moving the throttle valve at an appropriate rate closer to an open position thereof so as to shift the air flow expansion away from the throttle valve and toward the bypass valve and the FFT, while maintaining the desired engine air flow rate.

27. The method of claim 25, further comprising the steps of:
decreasing turbine power by moving the bypass valve at an appropriate rate closer to an open position thereof and simultaneously moving the throttle valve at an appropriate rate closer to a closed position thereof so as to shift the air flow expansion away from the bypass valve and the FFT and toward the throttle valve, while maintaining the desired engine airflow rate.

28. The method of claim 19, wherein during a transition to a wide-open-throttle engine condition the method further comprises the steps of:
opening the throttle valve sufficiently to substantially prevent any significant pressure drop across the throttle valve, and opening the bypass valve sufficiently to meet engine air flow demand.

29. The method of claim 19, further comprising a technique for improving engine acceleration response for rapidly commanded idle through mid-load engine accelerations by executing the steps of:
first rapidly opening the bypass valve and throttle valve from nearly closed positions to more open positions thereof at a rate in proportion to the commanded acceleration rate, to provide air flow that meets the rapid engine transient air flow demand, and then beginning to close the bypass valve to generate electrical power while moving the throttle valve toward the more open position an appropriate amount at an appropriate rate such that the combined air flow through the FFT and bypass valve, as regulated by the throttle valve, collectively still meet the engine air flow demand.

**Patentansprüche**

1. Verfahren zum Steuern eines Drosselverlustrückgewinnungssystems (TLR-System) für eine Fremdzündungsbrennkraftmaschine, wobei das TLR-System eine Turbine, durch die sich Einlassluft bewegt, bevor sie zur Brennkraftmaschine geliefert wird, und einen elektrischen Generator, der an die Turbine gekoppelt ist und durch die Turbine drehend angetrieben wird, enthält, das TLR-System ferner einen Umgehungskanal, um die Turbine zu umgehen, und ein Umgehungsventil, das steuerbar ist, um den Fluss durch den Umgehungskanal zu steuern, enthält und die Turbine eine Turbine (VNT) mit hohem Verlust und veränderbarer Düse umfasst, die zwischen einer vollständig geschlossenen und einer vollständigen geöffneten Stellung steuerbar ist, wobei die Durchflussmenge durch die VNT in der vollständig geschlossenen Stellung größer als eine erforderliche Kraftmaschinenleerlaufdurchflussmenge ist, das TLR-System ferner eine Drosselklappe, die mit der VNT in Reihe geschaltet ist, enthält, um den Fluss zur Kraftmaschine zu steuern, und das Verfahren die folgenden Schritte umfasst:

Detektieren einer Drehzahl $\omega$ des Generators;
Bereitstellen eines Gleichrichters, eines Filters, einer Überspannungssteuereinheit und einer Pulsbreitenmodulationssteuereinheit (PWM-Steuereinheit) zwischen dem Generator und einer Last, die durch den Generator bedient wird, derart dass elektrische Wechselstromleistung, die durch den Generator erzeugt wird, in Gleichstrom gleichgerichtet und gefiltert, überspannungsgesteuert und mittels der PWM-Steuereinheit der Last zugeführt wird;
Vordefinieren einer Erzeugungszone für elektrische Leistung, die auf einer Seite durch einen vorgegebenen minimalen Generatordrehzahlschwellenwert $\omega_{min}$ und auf einer gegenüberliegenden Seite durch einen vorgegebenen maximalen Generatordrehzahlschwellenwert $\omega_{max}$ begrenzt ist;
Konfigurieren der PWM-Steuereinheit derart, dass dann, wenn das TLR-System aktiviert ist, ein Tastverhältnis der PWM-Steuereinheit

gleich null ist, wenn die Generatordrehzahl $\omega$ weniger als $\omega_{min}$ ist;
100 % ist, wenn $\omega$ größer als $\omega_{max}$ ist; und gleich $F$ ist, wenn $\omega$ in der Erzeugungszone für elektrische Leistung, in der $F$ größer als null jedoch kleiner als 100 % ist, liegt; und

Steuern der Kraftmaschinenluftdurchflussmenge im Leerlauf der Kraftmaschine durch Einstellen der VNT in die vollständig geschlossene Stellung, Einstellen des Umgehungsventils in eine teilweise geöffnete Stellung und Steuern der Drosselklappe, um die erforderliche Leerlaufluftdurchflussmenge zu erreichen.

2. Verfahren nach Anspruch 1, wobei das Verfahren während eines Übergangs vom Leerlauf zu einem höheren Kraftmaschinenlastzustand ferner die folgenden Schritte umfasst:
Bewegen der VNT von der vollständig geschlossenen Stellung zu einer teilweise geöffneten Stellung und gleichzeitig Bewegen des Umgehungsventils von der teilweise geöffneten Stellung zu einer geschlossenen Stellung, wobei die VNT und das Umgehungsventil mit entsprechenden Geschwindigkeiten bewegt werden, derart, dass Luftdurchflussmengen durch die VNT und das Umgehungsventil zusammen den Luftdurchflussbedarf erfüllen.

3. Verfahren nach Anspruch 2, das ferner den Schritt des Öffnens der Drosselklappe gleichzeitig mit den Bewegungen der VNT und des Umgehungsventils umfasst, wobei die Drosselklappe mit einer ausreichend hohen Geschwindigkeit und zu einer ausreichend geöffneten Stellung bewegt wird, um einen erheblichen Druckabfall über der Drosselklappe im Wesentlichen zu verhindern.

4. Verfahren nach Anspruch 1, wobei das Verfahren während eines Niedriglastfahrzustands, in dem $\omega$ in der Erzeugungszone für elektrische Leistung liegt, ferner die folgenden Schritte umfasst:

Einstellen des Umgehungsventils in die geschlossene Stellung, Öffnen der Drosselklappe ausreichend, um einen erheblichen Druckabfall über der Drosselklappe im Wesentlichen zu verhindern, und Steuern des Kraftmaschinenluftdurchflusses durch Steuern der Stellung der VNT.

5. Verfahren nach Anspruch 1, wobei das Verfahren während eines Übergangs von einer mittleren Kraftmaschinenlast zu einer hohen Kraftmaschinenlast ferner die folgenden Schritte umfasst:

Bewegen der VNT von einer teilweise geöffneten Stellung zur vollständig geöffneten Stellung und gleichzeitig Bewegen des Umgehungsventils von der geschlossenen Stellung zu einer teilweise geöffneten Stellung, wobei die VNT und das Umgehungsventil mit entsprechenden Geschwindigkeiten bewegt werden, derart, dass die Luftdurchflussmengen durch die VNT und das Umgehungsventil zunehmen, um gemeinsam die Kraftmaschinenluftdurchflussmenge zu erfüllen.

6. Verfahren nach Anspruch 5, das ferner den Schritt des Öffnens der Drosselklappe gleichzeitig mit den Bewegungen der VNT und des Umgehungsventils umfasst, wobei die Drosselklappe mit einer ausreichend hohen Geschwindigkeit und zu einer ausreichend geöffneten Stellung bewegt wird, um einen erheblichen Druckabfall über der Drosselklappe im Wesentlichen zu verhindern.

7. Verfahren nach Anspruch 1, wobei das Verfahren während eines Übergangs zu einem Kraftmaschinenzustand mit weit geöffneter Drosselklappe ferner die folgenden Schritte umfasst:

Einstellen der VNT in die vollständig geöffnete Stellung, Öffnen der Drosselklappe ausreichend, um einen erheblichen Druckabfall über der Drosselklappe im Wesentlichen zu verhindern, und Erfüllen der Kraftmaschinenluftdurchflussmenge durch Steuern des Umgehungsventils.

8. Verfahren nach Anspruch 1, das ferner eine Technik zum Verbessern der Kraftmaschinenbeschleunigungsantwort für rasch angeforderten Leerlauf über Mittellastkraftmaschinenbeschleunigungen durch Ausführen der folgenden Schritte umfasst:

zunächst rasches Öffnen des Umgehungsventils und der Drosselklappe aus anfänglichen Stellungen zu weiter geöffneten Stellungen mit einer Geschwindigkeit im Verhältnis zur angeforderten Beschleunigungsrate, um einen Luftdurchfluss bereitzustellen, der den raschen, transienten Kraftmaschinenluftdurchflussbedarf erfüllt, während die VNT in einer anfänglichen Leerlaufstellung erhalten wird, und dann beginnen, die VNT zu öffnen, um elektrische Leistung zu erzeugen, während das Umgehungsventil um einen angemessenen Betrag mit einer angemessenen Geschwindigkeit zurück zur geschlossenen Stellung bewegt wird, derart, dass der kombinierte Luftdurchfluss durch die VNT und das Umgehungsventil, wie er durch die Drosselklappe gesteuert wird, immer noch den Kraftmaschinenluftdurchflussbedarf erfüllt.

9. Verfahren nach Anspruch 1, wobei während eines Kraftmaschinenzustands mit hohem Luftdurchfluss, in dem das Umgehungsventil mindestens teilweise geöffnet ist, dann, wenn eine rasche Abnahme des Kraftmaschinenlastbedarfs für ein schnelles Verzögern der Kraftmaschine auftritt, das Verfahren wirksam ist, um die Kraftmaschinenlast rasch zu verringern, ohne ein Überdrehen der VNT und des Generators zu bewirken, wobei das Verfahren ferner die folgenden Schritte umfasst:

Bewegen des Umgehungsventils gemäß dem abnehmenden Kraftmaschinenlastbedarf zur geschlossenen Stellung und nahezu gleichzeitig Bewegen der VNT um einen erheblichen Betrag mit einer raschen Geschwindigkeit zur vollständig geschlossenen Stellung, wodurch verhindert wird, dass ein Luftdurchflussimpuls in übermäßigen Mengen durch die VNT gezwungen wird.

10. Verfahren zum Steuern eines Drosselverlustrückgewinnungssystems (TLR-System) für eine Fremdzündungsbrennkraftmaschine, wobei das TLR-System eine Turbine, durch die sich Einlassluft bewegt, bevor sie zur Brennkraftmaschine geliefert wird, und einen elektrischen Generator, der an die Turbine gekoppelt ist und durch die Turbine drehend angetrieben wird, enthält, das TLR-System ferner einen Umgehungskanal, um die Turbine zu umgehen, und ein Umgehungsventil, das steuerbar ist, um den Fluss durch den Umgehungskanal zu steuern, enthält und die Turbine eine Turbine (VNT) mit niedrigem Verlust und veränderbarer Düse umfasst, die zwischen einer vollständig geschlossenen und einer vollständigen geöffneten Stellung steuerbar ist, wobei die Durchflussmenge durch die VNT in der vollständig geschlossenen Stellung geringer als eine erforderliche Kraftmaschinenleerlaufdurchflussmenge ist, derart dass die Kraftmaschinenleerlaufdrehzahl erreicht wird, ohne ein in Reihe geschaltete Drosselklappe zu benötigen, und das Verfahren die folgenden Schritte umfasst:

Detektieren einer Drehzahl $\omega$ des Generators;
Bereitstellen eines Gleichrichters, eines Filters, einer Überspannungssteuereinheit und einer Pulsbreitenmodulationssteuereinheit (PWM-Steuereinheit) zwischen dem Generator und einer Last, die durch den Generator bedient wird, derart dass elektrische Wechselstromleistung, die durch den Generator erzeugt wird, in Gleichstrom gleichgerichtet und gefiltert, überspannungsgesteuert und mittels der PWM-Steuereinheit der Last zugeführt wird;

Vordefinieren einer Erzeugungszone für elektrische Leistung, die auf einer Seite durch einen vorgegebenen minimalen Generatordrehzahlschwellenwert $\omega_{min}$ und auf einer gegenüberliegenden Seite durch einen vorgegebenen maximalen Generatordrehzahlschwellenwert $\omega_{max}$ begrenzt ist;

Konfigurieren der PWM-Steuereinheit derart, dass dann, wenn das TLR-System aktiviert ist, ein Tastverhältnis der PWM-Steuereinheit

gleich null ist, wenn $\omega$ weniger als $\omega_{min}$ ist; 100 % ist, wenn $\omega$ größer als $\omega_{max}$ ist; und gleich $F$ ist, wenn $\omega$ in der Erzeugungszone für elektrische Leistung, in der $F$ größer als null jedoch kleiner als 100 % ist, liegt; und

Steuern der Kraftmaschinenluftdurchflussmenge im Leerlauf der Kraftmaschine durch Einstellen des Umgehungsventils in eine vollständig geschlossene Stellung und Steuern der Stellung der VNT, um die erforderliche Leerlaufluftdurchflussmenge zu erreichen.

11. Verfahren nach Anspruch 10, das ferner das Steuern der Kraftmaschinenluftdurchflussmenge im Leerlauf der Kraftmaschine durch ein alternatives Verfahren umfasst, indem die VNT in die vollständig geschlossene Stellung eingestellt wird und die Stellung des Umgehungsventils derart gesteuert wird, dass die erforderliche Leerlaufluftdurchflussmenge erreicht wird.

12. Verfahren nach Anspruch 10, wobei das Verfahren während eines Übergangs vom Leerlauf zu einem höheren Kraftmaschinenlastzustand ferner die folgenden Schritte umfasst:
Halten des Umgehungsventils in der geschlossenen Stellung, während die VNT in eine teilweise geöffnete Stellung geöffnet wird, derart, dass die Luftdurchflussmenge durch die VNT ansteigt, um den Kraftmaschinenluftdurchflussbedarf zu erfüllen.

13. Verfahren nach Anspruch 10, wobei das Verfahren während eines Niedriglastfahrzustands, in dem $\omega$ in der Erzeugungszone für elektrische Leistung liegt, ferner die folgenden Schritte umfasst:
Halten des Umgehungsventils in der geschlossenen Stellung und Einstellen der VNT derart, dass sie den Kraftmaschinenluftdurchflussbedarf erfüllt.

14. Verfahren nach Anspruch 10, wobei das Verfahren während eines Übergangs von einer mittleren Kraftmaschinenlast zu einer hohen Kraftmaschinenlast ferner die folgenden Schritte umfasst:

Bewegen der VNT von einer teilweise geöffneten Stellung zur vollständig geöffneten Stellung und gleichzeitig Bewegen des Umgehungsventils von der geschlossenen Stellung zu einer teilweise geöffneten Stellung, wobei die VNT und das Umgehungsventil mit entsprechenden Geschwindigkeiten bewegt werden, derart, dass die Luftdurchflussmengen durch die VNT und das Umgehungsventil zunehmen, um gemeinsam die Kraftmaschinenluftdurchflussmenge zu erfüllen.

15. Verfahren nach Anspruch 14, wobei die VNT anfängt, sich zur vollständig geöffneten Stellung zu bewegen, bevor das Umgehungsventil beginnt, sich von der geschlossenen Stellung zur teilweise geöffneten Stellung zu bewegen, und das Umgehungsventil beginnt, sich zu bewegen, bevor die VNT die vollständig geöffnete Stellung erreicht.

16. Verfahren nach Anspruch 10, wobei das Verfahren während eines Übergangs zu einem Kraftmaschinenzustand mit weit geöffneter Drosselklappe ferner die folgenden Schritte umfasst:
Einstellen der VNT in die vollständig geöffnete Stellung und Öffnen des Umgehungsventils ausreichend, um die Kraftmaschinenluftdurchflussanforderung zu erfüllen.

17. Verfahren nach Anspruch 10, das ferner eine Technik zum Verbessern der Kraftmaschinenbeschleunigungsantwort für rasch angeforderten Leerlauf über Mittellastkraftmaschinenbeschleunigungen durch Ausführen der folgenden Schritte umfasst:
zunächst rasches Öffnen des Umgehungsventils aus der geschlossenen Stellung zu einer weiter geöffneten Stellung mit einer Geschwindigkeit im Verhältnis zur angeforderten Beschleunigungsrate, um einen Luftdurchfluss bereitzustellen, der den raschen, transienten Kraftmaschinenluftdurchflussbedarf erfüllt, während die VNT in einer anfänglichen Leerlaufstellung erhalten wird, und dann beginnen, die VNT zu öffnen, um elektrische Leistung zu erzeugen, während das Umgehungsventil um einen angemessenen Betrag mit einer angemessenen Geschwindigkeit zurück zur geschlossenen Stellung bewegt wird, derart, dass der kombinierte Luftdurchfluss durch die VNT und das Umgehungsventil immer noch den Kraftmaschinenluftdurchflussbedarf erfüllt.

18. Verfahren nach Anspruch 10, wobei während eines Kraftmaschinenzustands mit hohem Luftdurchfluss, in dem das Umgehungsventil mindestens teilweise geöffnet ist, dann, wenn eine rasche Abnahme des Kraftmaschinenlastbedarfs für ein schnelles Verzögern der Kraftmaschine auftritt, das Verfahren wirksam ist, um die Kraftmaschinenlast rasch zu verringern, ohne ein Überdrehen der VNT-Turbine und des Generators zu bewirken, wobei das Verfahren ferner die folgenden Schritte umfasst:

Bewegen des Umgehungsventils gemäß dem abnehmenden Kraftmaschinenlastbedarf zur geschlossenen Stellung und nahezu gleichzeitig Bewegen der VNT um einen erheblichen Betrag mit einer raschen Geschwindigkeit zur vollständig geschlossenen Stellung, wodurch verhindert wird, dass ein Luftdurchflussimpuls in übermäßigen Mengen durch die VNT gezwungen wird.

19. Verfahren zum Steuern eines Drosselverlustrückgewinnungssystems (TLR-System) für eine Fremdzündungsbrennkraftmaschine, wobei das TLR-System eine Turbine, durch die sich Einlassluft bewegt, bevor sie zur Brennkraftmaschine geliefert wird, und einen elektrischen Generator, der an die Turbine gekoppelt ist und durch die Turbine drehend angetrieben wird, enthält, das TLR-System ferner einen Umgehungskanal, um die Turbine zu umgehen, und ein Umgehungsventil, das steuerbar ist, um den Fluss durch den Umgehungskanal zu steuern, enthält und die Turbine eine freischwebende Turbine (FFT) umfasst, das TLR-System ferner eine Drosselklappe, die mit der FFT in Reihe geschaltet ist, enthält, um den Fluss zur Kraftmaschine zu steuern, und das Verfahren die folgenden Schritte umfasst:

Detektieren einer Drehzahl $\omega$ des Generators;
Bereitstellen eines Gleichrichters, eines Filters, einer Überspannungssteuereinheit und einer Pulsbreitenmodulationssteuereinheit (PWM-Steuereinheit) zwischen dem Generator und einer Last, die durch den Generator bedient wird, derart dass elektrische Wechselstromleistung, die durch den Generator erzeugt wird, in Gleichstrom gleichgerichtet und gefiltert, überspannungsgesteuert und mittels der PWM-Steuereinheit der Last zugeführt wird;
Vordefinieren einer Erzeugungszone für elektrische Leistung, die auf einer Seite durch einen vorgegebenen minimalen Generatordrehzahlschwellenwert $\omega_{min}$ und auf einer gegenüberliegenden Seite durch einen vorgegebenen maximalen Generatordrehzahlschwellenwert $\omega_{max}$ begrenzt ist;
Konfigurieren der PWM-Steuereinheit derart, dass dann, wenn das TLR-System aktiviert ist, ein Tastverhältnis der PWM-Steuereinheit

gleich null ist, wenn die Generatordrehzahl $\omega$ weniger als $\omega_{min}$ ist;
100 % ist, wenn $\omega$ größer als $\omega_{max}$ ist; und gleich $F$ ist, wenn $\omega$ in der Erzeugungszone für elektrische Leistung, in der $F$ größer als null jedoch kleiner als 100 % ist, liegt; und

Steuern der Kraftmaschinenluftdurchflussmenge im Leerlauf der Kraftmaschine durch Einstellen des Umgehungsventils in eine vollständig geschlossene Stellung und Steuern der Drosselklappe, um die erforderliche Leerlaufluftdurchflussmenge zu erreichen.

20. Verfahren nach Anspruch 19, wobei das Verfahren während eines Übergangs vom Leerlauf zu einem höheren Kraftmaschinenlastzustand ferner die folgenden Schritte umfasst:
Halten des Umgehungsventils in der geschlossenen Stellung und Öffnen der Drosselklappe mit einer Geschwindigkeit und zu einer Stellung, die ausreichen, um den Kraftmaschinenluftdurchflussbedarf zu erfüllen.

21. Verfahren nach Anspruch 19, wobei das Verfahren während eines Niedriglastfahrzustands, in dem $\omega$ in der Erzeugungszone für elektrische Leistung liegt, ferner die folgenden Schritte umfasst:
Halten des Umgehungsventils in der geschlossenen Stellung und Steuern des Kraftmaschinenluftdurchflusses durch Steuern der Stellung der Drosselklappe.

22. Verfahren nach Anspruch 19, wobei das Verfahren während eines Niedriglastfahrzustands, in dem $\omega$ in der Erzeugungszone für elektrische Leistung liegt, ferner die folgenden Schritte umfasst:
Erhöhen der Turbinenleistung durch Bewegen des Umgehungsventils mit einer angemessenen Geschwindigkeit näher zu seiner geschlossenen Stellung und gleichzeitig Bewegen der Drosselklappe mit einer angemessenen Geschwindigkeit näher zu ihrer geöffneten Stellung, um die Luftdurchflusserweiterung von der Drosselklappe weg und zum Umgehungsventil und der FFT zu schieben, während die gewünschte Kraftmaschinenluftdurchflussmenge erhalten wird.

23. Verfahren nach Anspruch 19, wobei das Verfahren während eines Niedriglastfahrzustands, in dem $\omega$ in der Erzeugungszone für elektrische Leistung liegt, ferner die folgenden Schritte umfasst:
Verringern der Turbinenleistung durch Bewegen des Umgehungsventils mit einer angemessenen Geschwindigkeit näher zu seiner geöffneten Stellung und gleichzeitig Bewegen der Drosselklappe mit einer angemessenen Geschwindigkeit näher zu ihrer geschlossenen Stellung, um die Luftdurchflusserweiterung vom Umgehungsventil und der FFT weg und zur Drosselklappe zu schieben, während die gewünschte Kraftmaschinenluftdurchflussmenge erhalten wird.

24. Verfahren nach Anspruch 19, wobei das Verfahren während eines Übergangs von einer mittleren Kraftmaschinenlast zu einer hohen Kraftmaschinenlast ferner die folgenden Schritte umfasst:

Bewegen der Drosselklappe von einer teilweise geöffneten Stellung zur vollständig geöffneten Stellung und gleichzeitig Bewegen des Umgehungsventils von der geschlossenen Stellung zu einer teilweise geöffneten Stellung, wobei die Drosselklappe und das Umgehungsventil mit entsprechenden Geschwindigkeiten bewegt werden, derart, dass die Luftdurchflussmengen durch die Drosselklappe und das Umgehungsventil zunehmen, um den Kraftmaschinenluftdurchflussbedarf zu erfüllen.

25. Verfahren nach Anspruch 24, wobei die Drosselklappe anfängt, sich von der teilweise geöffneten Stellung zur vollständig geöffneten Stellung zu bewegen, bevor das Umgehungsventil beginnt, sich von der geschlossenen Stellung zur teilweise geöffneten Stellung zu bewegen, und das Umgehungsventil beginnt, sich zur teilweise geöffneten Stellung zu bewegen, bevor die Drosselklappe die vollständig geöffnete Stellung erreicht.

26. Verfahren nach Anspruch 25, das ferner die folgenden Schritte umfasst:

Erhöhen der Turbinenleistung durch Bewegen des Umgehungsventils mit einer angemessenen Geschwindigkeit näher zu seiner geschlossenen Stellung und gleichzeitig Bewegen der Drosselklappe mit einer angemessenen Geschwindigkeit näher zu ihrer geöffneten Stellung, um die Luftdurchflusserweiterung von der Drosselklappe weg und zum Umgehungsventil und der FFT zu schieben, während die gewünschte Kraftmaschinenluftdurchflussmenge erhalten wird.

27. Verfahren nach Anspruch 25, das ferner die folgenden Schritte umfasst:

Verringern der Turbinenleistung durch Bewegen des Umgehungsventils mit einer angemessenen Geschwindigkeit näher zu seiner geöffneten Stellung und gleichzeitig Bewegen der Drosselklappe mit einer angemessenen Geschwindigkeit näher zu ihrer geschlossenen Stellung, um die Luftdurchflusserweiterung vom Umgehungsventil und der FFT weg und zur Drosselklappe zu schieben, während die gewünschte Kraftmaschinenluftdurchflussmenge erhalten wird.

28. Verfahren nach Anspruch 19, wobei das Verfahren während eines Übergangs zu einem Kraftmaschinenzustand mit weit geöffneter Drosselklappe ferner die folgenden Schritte umfasst:

Öffnen der Drosselklappe ausreichend, um einen erheblichen Druckabfall über der Drosselklappe im Wesentlichen zu verhindern, und Öffnen des Umgehungsventils ausreichend, um die Kraftmaschinenluftdurchflussanforderung zu erfüllen.

29. Verfahren nach Anspruch 19, das ferner eine Technik zum Verbessern der Kraftmaschinenbeschleunigungsantwort für rasch angeforderten Leerlauf über Mittellastkraftmaschinenbeschleunigungen durch Ausführen der folgenden Schritte umfasst:

zunächst rasches Öffnen des Umgehungsventils und der Drosselklappe aus nahezu geschlossenen Stellungen zu weiter geöffneten Stellungen mit einer Geschwindigkeit im Verhältnis zur angeforderten Beschleunigungsrate, um einen Luftdurchfluss bereitzustellen, der den raschen, transienten Kraftmaschinenluftdurchflussbedarf erfüllt, und dann Beginnen, das Umgehungsventil zu schließen, um elektrische Leistung zu erzeugen, während die Drosselklappe um einen angemessenen Betrag mit einer angemessenen Geschwindigkeit zur weiter geöffneten Stellung bewegt wird, derart, dass der kombinierte Luftdurchfluss durch die FFT und das Umgehungsventil, wie er durch die Drosselklappe gesteuert wird, gemeinsam immer noch den Kraftmaschinenluftdurchflussbedarf erfüllt.

## Revendications

1. Procédé pour contrôler un système de récupération de pertes d'énergie dues au papillon des gaz (TLR) pour un moteur à combustion interne à allumage par étincelles, dans lequel le système de TLR inclut une turbine, à travers laquelle de l'air d'admission passe avant d'être distribué au moteur, et un générateur électrique couplé à la turbine et entraîné, pour entrer en rotation, par la turbine, le système de TLR incluant en outre un passage de dérivation pour contourner la turbine et une soupape de dérivation contrôlable pour réguler l'écoulement à travers le passage de dérivation, et dans lequel la turbine comprend une turbine à buse variable (VNT) à haute fuite qui est contrôlable entre des positions complètement fermée et complètement ouverte, le taux d'écoulement à travers la VNT à la position complètement fermée étant supérieur à un taux d'écoulement d'air requis de moteur au ralenti, le système de TLR incluant en outre un papillon des gaz en série avec la VNT pour réguler l'écoulement vers le moteur, le procédé comprenant les étapes de :

la détection d'une vitesse de rotation $\omega$ du générateur ;
la fourniture d'un redresseur, d'un filtre, d'un contrôleur de surtension, et d'un contrôleur de modulation de largeur d'impulsion (PWM) entre le générateur et une charge servie par le générateur de telle sorte qu'une puissance électrique CA générée par le générateur soit redressée et filtrée en courant CC, contrôlée en surtension, et soit fournie à la charge par l'intermédiaire du contrôleur de PWM ;

la prédéfinition d'une zone de génération de puissance électrique bornée, sur un côté, par un seuil prédéfini de vitesse de générateur minimum $\omega_{min}$, et, sur un côté opposé, par un seuil prédéfini de vitesse de générateur maximum $\omega_{max}$ ;

la configuration du contrôleur de PWM de telle sorte que, lorsque le système de TLR est activé, un cycle de service du contrôleur de PWM soit égal à :

zéro, lorsque la vitesse de générateur $\omega$ est inférieure à $\omega_{min}$ ;
100 %, lorsque $\omega$ est supérieure à $\omega_{max}$; et
$F$, lorsque $\omega$ est au sein de la zone de génération de puissance électrique, où $F$ est supérieur à zéro mais inférieur à 100 % ;

au ralenti de moteur, le contrôle du taux d'écoulement d'air de moteur en réglant la VNT à la position complètement fermée, réglant la soupape de dérivation à une position partiellement ouverte, et le contrôle du papillon des gaz pour obtenir le taux d'écoulement d'air requis de ralenti.

2. Procédé selon la revendication 1, dans lequel, durant une transition depuis le ralenti jusqu'à une condition de charge de moteur plus haute, le procédé comprend en outre les étapes de :
la mise en mouvement de la VNT à partir de la condition complètement fermée vers une position partiellement ouverte et simultanément la mise en mouvement de la soupape de dérivation à partir de la position partiellement ouverte vers une position fermée, les VNT et soupape de dérivation étant mises en mouvement à des taux respectifs de telle sorte que des taux d'écoulement d'air à travers la VNT et la soupape de dérivation satisfassent collectivement à la demande de taux d'écoulement d'air de moteur.

3. Procédé selon la revendication 2, comprenant en outre l'étape de l'ouverture du papillon des gaz simultanément avec les mouvements de la VNT et de la soupape de dérivation, le papillon des gaz étant mis en mouvement à un taux suffisamment élevé, et jusqu'à une position suffisamment ouverte, pour sensiblement empêcher une quelconque chute de pression importante à travers le papillon des gaz.

4. Procédé selon la revendication 1, dans lequel, durant une condition de vitesse de croisière à faible charge, où $\omega$ est au sein de la zone de génération de puissance électrique, le procédé comprend en outre les étapes de :
le réglage de la soupape de dérivation dans la position fermée, l'ouverture suffisante du papillon des gaz pour sensiblement empêcher une quelconque chute de pression importante à travers le papillon des gaz, et le contrôle de l'écoulement d'air de moteur en contrôlant la position de la VNT.

5. Procédé selon la revendication 1, dans lequel, durant une transition depuis une charge de moteur moyenne jusqu'à une haute charge de moteur, le procédé comprend en outre les étapes de :
la mise en mouvement de la VNT à partir d'une position partiellement ouverte vers la position complètement ouverte et simultanément la mise en mouvement de la soupape de dérivation à partir de la position fermée vers une position partiellement ouverte, les VNT et soupape de dérivation étant mises en mouvement à des taux respectifs de telle sorte que des taux d'écoulement d'air à travers la VNT et la soupape de dérivation augmentent pour collectivement satisfaire à la demande d'écoulement d'air de moteur.

6. Procédé selon la revendication 5, comprenant en outre l'étape de l'ouverture du papillon des gaz simultanément avec les mouvements de la VNT et de la soupape de dérivation, le papillon des gaz étant mis en mouvement à un taux suffisamment élevé, et jusqu'à une position suffisamment ouverte, pour sensiblement empêcher une quelconque chute de pression importante à travers le papillon des gaz.

7. Procédé selon la revendication 1, dans lequel, durant une transition jusqu'à une condition de moteur à papillon des gaz grand ouvert, le procédé comprend en outre les étapes de :
le réglage de la VNT dans la position complètement ouverte, l'ouverture suffisante du papillon des gaz pour sensiblement empêcher une quelconque chute de pression importante à travers le papillon des gaz, et la satisfaction à la demande d'écoulement d'air de moteur en contrôlant la soupape de dérivation.

8. Procédé selon la revendication 1, comprenant en outre une technique pour améliorer la réponse d'accélération de moteur pour des accélérations de moteur rapidement commandées, allant du ralenti à une charge moyenne, en exécutant les étapes de :
premièrement, l'ouverture rapide de la soupape de dérivation et du papillon des gaz à partir de positions initiales jusqu'à des positions plus ouvertes de ceux-ci à un taux en proportion au taux d'accélération commandé, pour fournir un écoulement d'air qui satisfait à la demande d'écoulement d'air transitoire rapide de moteur tout en maintenant la VNT dans une position initiale de ralenti, et puis le commencement de l'ouverture de la VNT pour générer une puissance électrique tout en mettant en mouvement la soupape de dérivation de retour vers la position fermée, selon une quantité appropriée, à un taux approprié, de telle sorte que l'écoulement d'air combiné à travers les VNT et soupape de dérivation, tel que régulé par le papillon des gaz, satisfasse toujours collectivement à la demande d'écoulement d'air de moteur.

9. Procédé selon la revendication 1, dans lequel, durant une condition de haut écoulement d'air de moteur où la soupape de dérivation est au moins partiellement ouverte, lorsqu'une réduction rapide de demande de charge de moteur se produit pour rapidement ralentir le moteur, le procédé est efficace pour rapidement réduire la charge de moteur sans causer de vitesse excessive de la VNT et du générateur, le procédé comprenant en outre les étapes de :

la mise en mouvement de la soupape de dérivation vers la position fermée conformément à la demande de charge de moteur en réduction, et presque simultanément la mise en mouvement de la VNT vers la condition complètement fermée, selon une quantité importante, à un taux rapide, ainsi empêchant une quantité de mouvement d'écoulement d'air d'être forcée à travers la VNT en quantités excessives.

10. Procédé pour contrôler un système de récupération de pertes d'énergie dues au papillon des gaz (TLR) pour un moteur à combustion interne à allumage par étincelles, dans lequel le système de TLR inclut une turbine, à travers laquelle de l'air d'admission passe avant d'être distribué au moteur, et un générateur électrique couplé à la turbine et entraîné, pour entrer en rotation, par la turbine, le système de TLR incluant en outre un passage de dérivation pour contourner la turbine et une soupape de dérivation contrôlable pour réguler l'écoulement à travers le passage de dérivation, et dans lequel la turbine comprend une turbine à buse variable (VNT) à faible fuite qui est contrôlable entre des positions complètement fermée et complètement ouverte, le taux d'écoulement à travers la VNT à la position complètement fermée étant inférieur à un taux d'écoulement d'air requis de moteur au ralenti de telle sorte qu'une vitesse de moteur au ralenti soit obtenue sans nécessiter de papillon des gaz en série, le procédé comprenant les étapes de :

la détection d'une vitesse de rotation $\omega$ du générateur ;
la fourniture d'un redresseur, d'un filtre, d'un contrôleur de surtension, et d'un contrôleur de modulation de largeur d'impulsion (PWM) entre le générateur et une charge servie par le générateur de telle sorte qu'une puissance électrique CA générée par le générateur soit redressée et filtrée en courant CC, contrôlée en surtension, et soit fournie à la charge par l'intermédiaire du contrôleur de PWM ;
la prédéfinition d'une zone de génération de puissance électrique bornée, sur un côté, par un seuil prédéfini de vitesse de générateur minimum $\omega_{min}$, et, sur un côté opposé, par un seuil prédéfini de vitesse de générateur maximum $\omega_{max}$ ;
la configuration du contrôleur de PWM de telle sorte que, lorsque le système de TLR est activé, un cycle de service du contrôleur de PWM soit égal à :

zéro, lorsque $\omega$ est inférieure à $\omega_{min}$ ;
100 %, lorsque $\omega$ est supérieure à $\omega_{max}$ ; et
$F$, lorsque $\omega$ est au sein de la zone de génération de puissance électrique, où $F$ est supérieur à zéro mais inférieur à 100 % ; et

au ralenti de moteur, le contrôle du taux d'écoulement d'air de moteur en réglant la soupape de dérivation à une position complètement fermée et le contrôle de la position de la VNT pour obtenir le taux d'écoulement d'air requis de ralenti.

11. Procédé selon la revendication 10, comprenant en outre, durant le ralenti du moteur, le contrôle du taux d'écoulement d'air de moteur par un autre procédé en réglant la VNT à la position complètement fermée et le contrôle de la position de la soupape de dérivation pour obtenir le taux d'écoulement d'air requis de ralenti.

12. Procédé selon la revendication 10, dans lequel, durant une transition depuis le ralenti jusqu'à une condition de charge de moteur plus haute, le procédé comprend en outre les étapes de :
le maintien de la soupape de dérivation dans la position fermée tout en ouvrant la VNT jusqu'à une position partiellement ouverte de telle sorte que le taux d'écoulement d'air à travers la VNT augmente pour satisfaire à la demande d'écoulement d'air de moteur.

13. Procédé selon la revendication 10, dans lequel, durant une condition de vitesse de croisière à faible charge, où $\omega$ est au sein de la zone de génération de puissance électrique, le procédé comprend en outre les étapes de :
le maintien de la soupape de dérivation dans la position fermée et le réglage de la VNT pour satisfaire à la demande d'écoulement d'air de moteur.

14. Procédé selon la revendication 10, dans lequel, durant une transition depuis une charge de moteur moyenne jusqu'à une haute charge de moteur, le procédé comprend en outre les étapes de :
la mise en mouvement de la VNT à partir d'une position partiellement ouverte vers la position complètement ouverte et simultanément la mise en mouvement de la soupape de dérivation à partir de la position fermée vers une position partiellement ouverte, les VNT et soupape de dérivation étant mises en mouvement à des taux respectifs de telle sorte que des taux d'écoulement d'air à travers la VNT et la soupape de dérivation augmentent pour collectivement satisfaire à la demande d'écoulement d'air de moteur.

**15.** Procédé selon la revendication 14, dans lequel la VNT commence à se mettre en mouvement vers la position complètement ouverte avant que la soupape de dérivation commence à se mettre en mouvement à partir de la position fermée vers la position partiellement ouverte, et la soupape de dérivation commence à se mettre en mouvement avant que la VNT atteigne la position complètement ouverte.

**16.** Procédé selon la revendication 10, dans lequel, durant une transition jusqu'à une condition de moteur à papillon des gaz grand ouvert, le procédé comprend en outre les étapes de :
le réglage de la VNT dans la position complètement ouverte, et l'ouverture suffisante de la soupape de dérivation pour satisfaire à la demande d'écoulement d'air de moteur.

**17.** Procédé selon la revendication 10, comprenant en outre une technique pour améliorer la réponse d'accélération de moteur pour des accélérations de moteur rapidement commandées, allant du ralenti à une charge moyenne, en exécutant les étapes de :
Premièrement, l'ouverture rapide de la soupape de dérivation à partir de la position fermée jusqu'à une position plus ouverte de celle-ci à un taux en proportion au taux d'accélération commandé, pour fournir un écoulement d'air qui satisfait à la demande d'écoulement d'air transitoire rapide de moteur tout en maintenant la VNT dans une position initiale de ralenti, et puis le commencement de l'ouverture de la VNT pour générer une puissance électrique tout en mettant en mouvement la soupape de dérivation de retour vers la position fermée, selon une quantité appropriée, à un taux approprié, de telle sorte que l'écoulement d'air combiné à travers les VNT et soupape de dérivation satisfasse toujours collectivement à la demande d'écoulement d'air de moteur.

**18.** Procédé selon la revendication 10, dans lequel, durant une condition de haut écoulement d'air de moteur où la soupape de dérivation est au moins partiellement ouverte, lorsqu'une réduction rapide de demande de charge de moteur se produit pour rapidement ralentir le moteur, le procédé est efficace pour rapidement réduire la charge de moteur sans causer de vitesse excessive de la VNT turbine et du générateur, le procédé comprenant en outre les étapes de :
la mise en mouvement de la soupape de dérivation vers la position fermée conformément à la demande de charge de moteur en réduction, et presque simultanément la mise en mouvement de la VNT vers la condition complètement fermée, selon une quantité importante, à un taux rapide, ainsi empêchant une quantité de mouvement d'écoulement d'air d'être forcée à travers la VNT en quantités excessives.

**19.** Procédé pour contrôler un système de récupération de pertes d'énergie dues au papillon des gaz (TLR) pour un moteur à combustion interne à allumage par étincelles, dans lequel le système de TLR inclut une turbine, à travers laquelle de l'air d'admission passe avant d'être distribué au moteur, et un générateur électrique couplé à la turbine et entraîné, pour entrer en rotation, par la turbine, le système de TLR incluant en outre un passage de dérivation pour contourner la turbine et une soupape de dérivation contrôlable pour réguler l'écoulement à travers le passage de dérivation, et dans lequel la turbine comprend une turbine flottante libre (FFT), le système de TLR incluant en outre un papillon des gaz en série avec la FFT pour réguler un écoulement d'air vers le moteur, le procédé comprenant les étapes de :

la détection d'une vitesse de rotation $\omega$ du générateur ;
la fourniture d'un redresseur, d'un filtre, d'un contrôleur de surtension, et d'un contrôleur de modulation de largeur d'impulsion (PWM) entre le générateur et une charge servie par le générateur de telle sorte qu'une puissance électrique CA générée par le générateur soit redressée et filtrée en courant CC, contrôlée en surtension, et soit fournie à la charge par l'intermédiaire du contrôleur de PWM ;
la prédéfinition d'une zone de génération de puissance électrique bornée, sur un côté, par un seuil prédéfini de vitesse de générateur minimum $\omega_{min}$ et, sur un côté opposé, par un seuil prédéfini de vitesse de générateur maximum $\omega_{max}$ ;
la configuration du contrôleur de PWM de telle sorte que, lorsque le système de TLR est activé, un cycle de service du contrôleur de PWM soit égal à :

zéro, lorsque la vitesse de générateur $\omega$ est inférieure à $\omega_{min}$ ;
100 %, lorsque $\omega$ est supérieure à $\omega_{max}$ ; et
$F$, lorsque $\omega$ est au sein de la zone de génération de puissance électrique, où $F$ est supérieur à zéro mais inférieur à 100 % ;

au ralenti de moteur, le contrôle du taux d'écoulement d'air de moteur en réglant la soupape de dérivation à une position complètement fermée et le contrôle du papillon des gaz pour obtenir le taux d'écoulement d'air requis de ralenti.

**20.** Procédé selon la revendication 19, dans lequel, durant une transition depuis le ralenti jusqu'à une condition de charge de moteur plus haute, le procédé comprend en outre les étapes de :
le maintien de la soupape de dérivation dans la position fermée et l'ouverture du papillon des gaz à un taux, et jusqu'à une position, suffisants pour satisfaire à la demande d'écoulement d'air de moteur.

**21.** Procédé selon la revendication 19, dans lequel, durant une condition de vitesse de croisière à faible charge, où $\omega$ est au sein de la zone de génération de puissance électrique, le procédé comprend en outre les étapes de :
le maintien de la soupape de dérivation dans la position fermée et le contrôle de l'écoulement d'air de moteur en contrôlant la position du papillon des gaz.

**22.** Procédé selon la revendication 19, dans lequel, durant une condition de vitesse de croisière à faible charge, où $\omega$ est au sein de la zone de génération de puissance électrique, le procédé comprend en outre les étapes de :
l'augmentation de la puissance de turbine en mettant en mouvement la soupape de dérivation, à un taux approprié, plus près de la position fermée de celle-ci et simultanément en mettant en mouvement le papillon des gaz, à un taux approprié, plus près d'une position ouverte de celui-ci afin de déplacer la dilatation d'écoulement d'air, pour l'éloigner du papillon des gaz, vers la soupape de dérivation et la FFT, tout en maintenant le taux d'écoulement d'air de moteur souhaité.

**23.** Procédé selon la revendication 19, dans lequel, durant une condition de vitesse de croisière à faible charge, où $\omega$ est au sein de la zone de génération de puissance électrique, le procédé comprend en outre les étapes de :
la réduction de la puissance de turbine en mettant en mouvement la soupape de dérivation, à un taux approprié, plus près d'une position ouverte de celle-ci et simultanément en mettant en mouvement le papillon des gaz, à un taux approprié, plus près d'une position fermée de celui-ci afin de déplacer la dilatation d'écoulement d'air, pour l'éloigner de la soupape de dérivation et de la FFT, vers le papillon des gaz, tout en maintenant le taux d'écoulement d'air de moteur souhaité.

**24.** Procédé selon la revendication 19, dans lequel, durant une transition depuis une charge de moteur moyenne jusqu'à une haute charge de moteur, le procédé comprend en outre les étapes de :
la mise en mouvement du papillon des gaz à partir d'une position partiellement ouverte vers la position complètement ouverte et simultanément la mise en mouvement de la soupape de dérivation à partir de la position fermée vers une position partiellement ouverte, le papillon des gaz et la soupape de dérivation étant mis en mouvement à des taux respectifs de telle sorte que des taux d'écoulement d'air à travers le papillon des gaz et la soupape de dérivation augmentent pour satisfaire à la demande d'écoulement d'air de moteur.

**25.** Procédé selon la revendication 24, dans lequel le papillon des gaz commence à se mettre en mouvement à partir de la position partiellement ouverte vers la position complètement ouverte avant que la soupape de dérivation commence à se mettre en mouvement à partir de la position fermée vers la position partiellement ouverte, et la soupape de dérivation commence à se déplacer vers la position partiellement ouverte avant que le papillon des gaz atteigne la position complètement ouverte.

**26.** Procédé selon la revendication 25, comprenant en outre les étapes de :
l'augmentation de la puissance de turbine en mettant en mouvement la soupape de dérivation, à un taux approprié, plus près de la position fermée de celle-ci et simultanément en mettant en mouvement le papillon des gaz, à un taux approprié, plus près d'une position ouverte de celui-ci afin de déplacer la dilatation d'écoulement d'air, pour l'éloigner du papillon des gaz, vers la soupape de dérivation et la FFT, tout en maintenant le taux d'écoulement d'air de moteur souhaité.

**27.** Procédé selon la revendication 25, comprenant en outre les étapes de :
la réduction de la puissance de turbine en mettant en mouvement la soupape de dérivation, à un taux approprié, plus près d'une position ouverte de celle-ci et simultanément en mettant en mouvement le papillon des gaz, à un taux approprié, plus près d'une position fermée de celui-ci afin de déplacer la dilatation d'écoulement d'air, pour l'éloigner de la soupape de dérivation et la FFT, vers le papillon des gaz, tout en maintenant le taux d'écoulement d'air de moteur souhaité.

**28.** Procédé selon la revendication 19, dans lequel, durant une transition jusqu'à une condition de moteur à papillon des gaz grand ouvert, le procédé comprend en outre les étapes de :
l'ouverture suffisante du papillon des gaz pour sensiblement empêcher une quelconque chute de pression importante à travers le papillon des gaz, et l'ouverture suffisante de la soupape de dérivation pour satisfaire à la demande d'écoulement d'air de moteur.

**29.** Procédé selon la revendication 19, comprenant en outre une technique pour améliorer la réponse d'accélération de moteur pour des accélérations de moteur rapidement commandées, allant du ralenti à une charge moyenne, en exécutant les étapes de : premièrement, l'ouverture rapide de la soupape de dérivation et du papillon des gaz depuis des positions presque fermées jusqu'à des positions plus ouvertes de ceux-ci, à un taux en proportion au taux d'accélération commandé, pour fournir un écoulement d'air qui satisfait à la demande d'écoulement d'air transitoire rapide de moteur, et puis le commencement de la fermeture de la soupape de dérivation pour générer une puissance électrique tout en mettant en mouvement le papillon des gaz vers la position plus ouverte, selon une quantité appropriée, à un taux approprié, de telle sorte que l'écoulement d'air combiné à travers les FFT et soupape de dérivation, tel que régulé par le papillon des gaz, satisfasse toujours collectivement à la demande d'écoulement d'air de moteur.

**Fig. 1**

**Fig. 2**

*Fig. 3*

Fig. 4

Fig. 5

**Fig. 6**

**LOAD PWM DUTY** — 100, 0

**GENERATOR SPEED** — MAX, MIN, ZERO

**BYPASS POSITION** — OPEN, CLOSED

**VNT POSITION** — OPEN, OPEN LIMIT, CLOSED

**THROTTLE POSITION** — OPEN, CLOSED (Idle)

**LOAD DEMAND (Pedal Position)** — MAX, MIN

TIME

*Fig. 7*

*Fig. 8*

*Fig. 9*

Fig. 10

*Fig. 11*

*Fig. 12*

TIME

*Fig. 13*

*Fig. 14*

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1462629 A1
- EP 2083154 A1
- WO 9604487 A1
- CA 2605310 A1